# EUROPÄISCHE PATENTSCHRIFT

(11) **EP 3 610 115 B1**
(45) Veröffentlichungstag und Bekanntmachung des Hinweises auf die Patenterteilung: **29.09.2021**
(21) Anmeldenummer: 18713822.7
(22) Anmeldetag: 16.03.2018
(51) Int. Cl.: E06B 3/263

(54) **ISOLIERPROFIL, INSBESONDERE FÜR DIE HERSTELLUNG VON FENSTER-, TÜREN- UND FASSADENELEMENTEN, SOWIE VERFAHREN ZU SEINER HERSTELLUNG**
INSULATION PROFILE, IN PARTICULAR FOR THE PRODUCTION OF WINDOW, DOOR AND FACADE ELEMENTS, AND METHODS FOR THE PRODUCTION THEREOF
PROFILÉ ISOLANT, EN PARTICULIER POUR LA FABRICATION D'ÉLÉMENTS DE FENÊTRES, DE PORTES ET DE FAÇADES, AINSI QUE SES PROCÉDÉS DE FABRICATION

(30) Priorität: 10.04.2017 DE 102017107684
(43) Veröffentlichungstag der Anmeldung: 19.02.2020
(73) Patentinhaber: Ensinger GmbH, 71154 Nufringen (DE)
(72) Erfinder: HOPPMANN, Severin, 70567 Stuttgart (DE); PAULUS, Wolfgang, 93462 Lam (DE); AUBELE, Susann-Marie, 70374 Stuttgart (DE); ELLWANGER, Roland, 71126 Gäufelden (DE); ROTHFUSS, Matthias, 72213 Altensteig (DE); MÖLLER, Michael, 93413 Cham (DE); SEHBURGER, Axel, 70199 Stuttgart (DE)
(74) Vertreter: Hoeger, Stellrecht & Partner Patentanwälte mbB
(86) Internationale Anmeldenummer: PCT/EP2018/056742
(87) Internationale Veröffentlichungsnummer: WO 2018/188895

(56) Entgegenhaltungen:
- DE-A1-102012 009 838
- DE-U1-202010 018 272
- DE-U1-202012 010 135

## Beschreibung

Die Erfindung betrifft Isolierprofile aus einem Polymerwerkstoff, insbesondere für die Herstellung von Fenster-, Türen- und Fassadenelementen, sowie Verfahren zur Herstellung der Isolierprofile. Die Isolierprofile werden insbesondere vielfältig bei der Herstellung von Metall-Kunststoff-Verbundprofilen eingesetzt, wobei die Isolierprofile der Wärme- und/oder Schalldämmung der Verbundprofile dienen und typischerweise zwei Metallprofile miteinander verbinden. Die erfindungsgemäßen Isolierprofile finden ferner Verwendung als sogenannte Schikanen, die als Schwellen z.B. in Schiebesystemen großformatiger Fenster oder Türen fungieren. Schließlich eignen sich die erfindungsgemäßen Isolierprofile als Fassadenabstandhalter, die insbesondere dazu verwendet werden, um benachbarte Glasscheiben oder sonstige Fassadenplatten bei Fassaden und Glasdachkonstruktionen zueinander auf Abstand zu halten und gegebenenfalls die dazwischen vorhandenen Spalte zu füllen.

Bisher werden die eingangs genannten Isolierprofile in der Regel nach speziellen geometrischen Vorgaben der Kunden gefertigt. Dazu werden in aufwändigen Verfahren hochpreisige Extrusionswerkzeuge angefertigt, mit welchen dann genau die Zielkonturen des vom Kunden vorgegebenen Isolierprofils produziert werden können.

Ein weiterer Nachteil dieses klassischen Verfahrens ist neben den hohen Werkzeugkosten die fehlende Flexibilität, um auf bestimmte Änderungswünsche bezüglich Anpassungen der Verbundgeometrie zu reagieren. So kann man z.B. nicht einfach die Ansichtsbreite des Metall-Kunststoff-Verbundes unter Beibehaltung des Isolierprofils erhöhen, ohne an Isolationswirkung zu verlieren.

Diesem Problem wird im Stand der Technik durch diverse Lösungsansätze begegnet.

Grundsätzlich ist zu beachten, dass derartige Isolierprofile sicherheitsrelevante Bauteile darstellen, die z.B. in Deutschland nach DIN EN 14024 eignungsgeprüft werden.

Es sind Isolierprofile bekannt, bei denen nachträglich Schaumkörper aufgebracht werden. Diese werden dabei entweder stoffschlüssig oder formschlüssig an dem Isolierprofil befestigt. Beispielsweise beschreibt die EP 1 347 141 A1 ein Isolierprofil, das mit Schaumleisten unterschiedlicher Höhe kombiniert wird.

Die DE 10 2010 064 034 A1 beschreibt ebenfalls Metall-Kunststoff-Verbundprofile, die unter Verwendung von nachträglich aufgebrachtem Schaummaterial in ihren Eigenschaften optimiert werden.

Im Markt gibt es weitere Lösungen, die sich aufgrund der Variantenvielfalt der möglichen Isolierschäume unterscheiden. An diese Schäume werden zum Teil hohe Anforderungen gestellt, insbesondere wenn die Schäume im Profilverbund den Prozessschritt des "Pulverlackierens" durchlaufen. Es gibt nur wenige Schaumtechnologien, welche die diversen chemischen Vorbehandlungsbäder und eine anschließende Temperaturbelastung beim Einbrennen beim Lackieren bis über 200 °C überstehen. Dabei sollen diese Schäume eine geringe Wärmeleitfähigkeit aufweisen, preisgünstig sowie umweltfreundlich bzw. recyclingfähig sein. Bis heute zeichnet sich kein System ab, welches alle diese Anforderungen erfüllt.

Eine andere Herangehensweise ist das Aufbringen von Funktionselementen in Form von Fahnen oder das nachträgliche Ausbilden von Hohlkammerstrukturen, z.B. durch polymere oder metallische Werkstoffe.

Aus der DE 296 21 419 ist U1 bekannt, dass man durch Aufclipsen eines U-förmigen Profils auf ein Basisprofil Isolierprofile variabel herstellen kann. Diese Isolierprofile können einfach angepasst werden, um den Profilverbund hinsichtlich der Isolationswirkung zu optimieren. Ein Nachteil dieses Verfahrens ist aber die Notwendigkeit sogenannter Befestigungsnasen auf dem Basisprofil für die Herstellung der Clipverbindung, wobei diese Nasen zudem die Befestigungsposition der zu bildenden Hohlkammer unveränderbar festlegen.

Die DE 195 28 498 A1 und die von dieser Druckschrift ausgehende DE 10 2012 009 838 A1 beschreiben eine Möglichkeit Verbundprofile herzustellen, indem nachträglich auf ein Isolierprofil/Basisprofil Fahnen aufgebracht werden.

Die DE 195 28 498 A1 beschreibt hierfür angespritzte oder Co-extrudierte Fahnen, z.B. aus Polyamid- oder Polyesterwerkstoffen, sowie metallische Fahnen. Aus diesen Druckschriften lässt sich jedoch nicht ableiten, wie eine metallische Fahne dauerhaft fest angefügt werden kann, ohne die thermische Isolationswirkung und die mechanischen Eigenschaften - speziell die Querzugfestigkeit z.B. nach DIN EN 14024 - deutlich zu verschlechtern.

Die DE 10 2012 009 838 A1 beschreibt ein Isolierprofil mit einer Fahnenstruktur, die mehrere parallel verlaufende isolierte Hohlkammern aufweist, wobei die Fahne z.B. aus einem Kunststoff-Folienmaterial hergestellt werden kann.

Aufgrund der dünnen Wandstärken von Folienmaterialien in Kombination mit der beschriebenen Hohlkammerstruktur sind derartige Produkte im Brandfall gegenüber anderen Lösungen offensichtlich nachteilig. Das Aufbringen der Fahne erfolgt z.B. durch Kleben oder Schweißen. Freistehende dünne Kunststofffolien haben außerdem den Nachteil, dass sie leicht biegbar sind. Beim Transport und bei der Lagerung derartiger Produkte in einem Transportbehältnis ist es daher wahrscheinlich, dass Fahnen aus freistehenden Folien sich unter dem Eigengewicht der Profile anlegen, sich verbiegen und dauerhaft deformieren. Dieses Szenario stellt ein typisches Ausschusskriterium dar.

Ein Verbundprofil mit Isolierprofilen aus Kunststoff und mit verbrückender, wärmeisolierender metallischer Querfahne wird in DE 195 11 081 A1 beschrieben.

In der EP 2 527 580 A1 wird ein Verbundprofil beschrieben, bei dem die Funktion einer Querfahne durch ein separates Profil realisiert wird, die an einer der Metallschalen des Verbundprofils befestigt wird.

Eine Verlängerung von Fahnen bei Isolierprofilen durch Adapter findet sich z.B. in der EP 2 432 960 A1 beschrieben. Man erkennt jedoch allein aus den Querschnittsflächen der beschriebenen und gezeigten Profilgeometrien, dass diese Lösung nur unter hohem Materialeinsatz realisierbar ist.

Isolierprofile mit der Funktion als Abstandhalter für Fassadenelemente sind in großer Vielfalt beispielsweise aus der WO 2015/189348 A1 bekannt.

All diese beschriebenen Varianten sind nicht vollständig zufriedenstellend, weshalb sich die Aufgabe stellt, ein verbessertes Isolierprofil vorzuschlagen, welches den genannten Problemen und Anforderungen Rechnung trägt.

Diese Aufgabe wird erfindungsgemäß von einem Isolierprofil gemäß Anspruch 1 und einem Verfahren zu dessen Herstellung gemäß Anspruch 11 gelöst.

Erfindungsgemäß wird zunächst ein Isoliersteg mit einem (oder gegebenenfalls mehreren) Profilkörpern und mindestens einem an den Profilkörper - im Folgenden auch Grundkörper genannt - angeformten Randabschnitt hergestellt, wobei mit dem Isoliersteg nachträglich ein oder mehrere erste Funktionselemente, z.B. in Form sogenannter Fahnen und/oder anderer Funktionsteile, stoffschlüssig verbunden werden. Die Funktionselemente werden häufig ebenfalls aus einem Polymerwerkstoff hergestellt.

Die stoffschlüssige Verbindung kann erfindungsgemäß in variabler Position längs und/oder quer zu dem Profilquerschnitt oder an einer vorgegebenen Position erfolgen. Die Verbindung des Profilkörpers mit dem oder den ersten Funktionselementen kann in Längsrichtung des Isolierprofils fortlaufend, d.h. insbesondere kontinuierlich, oder auch in Abständen an mehreren aufeinander folgenden Positionen punktuell oder abschnittsweise erfolgen.

Häufig wird der Isoliersteg mit zwei Randabschnitten ausgebildet, die senkrecht zur Längsrichtung des Isolierprofils gegenüberliegend an den Profilkörper angeformt sind.

Der Isoliersteg kann darüber hinaus auch zwei oder mehr Profilkörper aufweisen, wobei in der Summe mindestens ein Randabschnitt an einen der Profilkörper angeformt ist.

Die Wandstärke der Profilkörper der erfindungsgemäßen Isolierprofile beträgt ca. 0,6 mm bis ca. 2,5 mm, bevorzugt ca. 0,7 mm bis ca. 2 mm. Sie kann aber in besonderen Einsatzfällen auch dicker sein.

Die ersten Funktionselemente erstecken sich vorzugsweise merklich von der Oberfläche des Profilkörpers oder des Randabschnitts (in senkrechter Richtung) weg, beispielsweise ca. 3 mm oder mehr.

Die ersten Funktionselemente weisen Wandstärken im Bereich von ca. 0,6 mm bis ca. 2 mm oder auch mehr auf, je nach der dem ersten Funktionselement zugewiesenen Funktion.

Die Funktionen der ersten Funktionselemente sind insbesondere die Übertragung von Kräften, die Aufnahme von Dichtungselementen, beispielsweise Elastomerdichtungselementen, die Funktion einer sogenannten Fahne, d.h. eines Strukturelementes zur Unterteilung von Hohlräumen zur Verminderung oder Unterdrückung von Konvektionsströmungen und anderem. Die Form der Funktionselemente kann dann u.a. die Form von Fahnen, Haken, Nasen, Nuten, T-förmigen Absprüngen, Pfeilen beinhalten oder annehmen.

Bevorzugt sind die Funktionselemente dann aus einem Werkstoff, insbesondere einem Polymerwerkstoff, mit einem E-Modul von z.B. ca. 2000 MPa oder mehr, vorzugsweise ca. 3000 MPa oder mehr und/oder einer Zugfestigkeit von ca. 40 MPa oder mehr gefertigt.

Die Verbindung der ersten Funktionselemente mit dem Isoliersteg kann direkt, gegebenenfalls an einem am Isoliersteg ausgebildeten Vorsprung, oder auch indirekt über Montageelemente erfolgen, wobei dann zunächst die Montageelemente an dem Isoliersteg, insbesondere an dessen Profilkörper(n) stoffschlüssig festgelegt und danach das oder die Funktionselemente mit dem Montageelement verbunden werden.

Dadurch lassen sich die Isolierprofile einerseits bezüglich der Rohstoffe wirtschaftlich fertigen, andererseits muss die Rohstoffvielfalt im Produkt nicht unnötig erhöht werden. Hieraus ergeben sich Vorteile für den Kunden hinsichtlich der Wirtschaftlichkeit und der technischen Performance, und die Isolierprofile sind leicht zu verarbeiten und sicher in der Anwendung. Die Verarbeitung der Profile umfasst hierbei insbesondere
- das Transportieren und Lagern (z.B. lose oder gebündelt in einem Transportbehälter für Stangenware);
- das Schneiden, Sägen und Fräsen z.B. um Profile abzulängen, anzuspitzen, zu durchlöchern oder für eine Anwendung passend zu konfektionieren;
- das Konditionieren um Feuchtegehalte zu steuern oder bestimmte Lager- und Alterungszustände einzustellen;
- das Durchführen von Reinigungs- und Vorbehandlungsschritten, z.B. mit wässrigen Dispersionen, Lösungen oder Lösemitteln, oder Chemikalien, insbesondere zur Vorbereitung von Beschichtungsprozessen (Lackieren, Kleben, etc.);
- das Durchführen von Beschichtungen, insbesondere von Lackierungen z.B. Pulverlack-Einbrennlackierungen bei Temperaturen von bis zu 200°C oder bis zu 220°C; sowie
- das Aufbringen oder Anbringen von Schäumen oder geschäumten Materialien.

Dabei lassen sich insbesondere Isolierprofile mit einer hohen Maßhaltigkeit, d.h. geringen Toleranzen, und insbesondere einer hohen Parallelität der einzelnen Bestandteile des Isolierprofils herstellen. Dies erleichtert in erheblichem Maße die Verarbeitung der Isolierprofile zu Verbundprofilen.

Der Polymerwerkstoff des Isolierstegs ist vorzugsweise ein thermoplastischer oder duroplastischer Werkstoff. Der Polymerwerkstoff kann neben einem oder mehreren Polymeren zusätzlich Verstärkungsstoffe, insbesondere Fasern, besonders bevorzugt in Form von Glasfasern, sonstige Füllstoffe, Additive, Farbstoffe etc. enthalten.

Die faserverstärkten Polymerwerkstoffe beinhalten bevorzugt Verstärkungsfasern mit einem Anteil von ca. 5 bis ca. 60 Gew.-%, weiter bevorzugt mit einem Anteil von ca. 20 bis ca. 50 Gew.-%. Dies gilt insbesondere für den Polymerwerkstoff des Profilkörpers des erfindungsgemäßen Isolierprofils.

Der Randabschnitt oder die Randabschnitte können in unterschiedlichen Konfigurationen zu dem Profilkörper angeordnet ausgebildet werden. Beispielsweise können sich diese im Wesentlichen parallel zu einer Ebene des Profilkörpers erstrecken oder auch gegenüber einer Ebene des Profilkörpers abgekröpft ausgebildet sein.

Bevorzugte erfindungsgemäße Isolierprofile gemäß einer ersten Variante weisen einen Profilkörper mit einem sich in Längsrichtung des Isolierprofils erstreckenden Bereich auf, der im Wesentlichen plan ausgebildet ist. Gegebenenfalls kann/können der oder auch die Profilkörper insgesamt plan ausgebildet sein.

Gemäß einer weiteren Variante weisen die erfindungsgemäßen Isolierprofile einen Profilkörper insbesondere mit zwei Randabschnitten auf, der in einem Bereich, gegebenenfalls zwischen den Randabschnitten, in Längsrichtung des Isolierprofils in vorgegebenen, insbesondere regelmäßigen Abständen aufeinanderfolgend angeordnete Erhebungen und Vertiefungen aufweist, die so eine Art Wellenstruktur bilden. Bevorzugt erstrecken sich die Erhebungen und Vertiefungen im Wesentlichen über die gesamte Breite des Profilkörpers.

Des Weiteren kann das erfindungsgemäße Isolierprofil einen Profilkörper aufweisen, der in vorgegebenen, insbesondere regelmäßigen, Abständen Durchgangsöffnungen aufweist, welche sich bevorzugt quer zur Längsrichtung des Isolierprofils erstrecken.

In einigen bevorzugten Ausführungsformen der Erfindung weisen die Isolierprofile mindestens einen der Randabschnitte mit einem Verbindungselement ausgestattet auf, welches insbesondere in Form eines Einrollkopfes ausgebildet sein kann.

Weiter bevorzugt sind erfindungsgemäße Isolierprofile, bei denen das oder die Funktionselemente mit dem Profilkörper und/oder den Randabschnitten des Isolierstegs stoffschlüssig verbunden sind, wobei die stoffschlüssige Verbindung vorzugsweise Hilfsstoff-frei hergestellt ist. Werden zur Verbindung der Funktionselemente Montageelemente verwendet, werden auch dies vorzugsweise Hilfsstoff-frei mit dem Isoliersteg bzw. dessen Profilkörper und/oder dessen Randabschnitten verbunden.

Hierbei kann/können insbesondere das oder die ersten Funktionselemente mit dem Profilkörper und/oder den Randabschnitten des Isolierstegs stoffschlüssig verbunden sein, wobei die stoffschlüssige Verbindung durch Schmelzen oder Anschmelzen des Profilkörpers und/oder der ersten Funktionselemente hergestellt ist. Bevorzugt wird bei dieser Technik darauf geachtet, dass die mechanische Festigkeit der Verbindung der ersten Funktionselemente mit dem Profilkörper und/oder dem mindestens einen Randabschnitt eine Festigkeit aufweist, die ein einfaches und sicheres Handhaben der Isolierprofile während des Transports und der Verarbeitung zulässt. Ebenfalls muss die Verbindung ausreichend dauerhaft sein, um im Einsatzbereich des Produktes über den Lebenszyklus zu funktionieren, dies ist einem Fachmann geläufig. Die Verbindung sollte z.B. eine Festigkeit von mindestens 2 N/mm, bevorzugt mindestens 5 N/mm besonders bevorzugt mindestens 10 N/mm aufweisen. Diese Festigkeit wird z.B. gemessen durch einen Zugversuch, bei dem ein Basisprofil einer bestimmten Länge (ergibt die Bezugslänge der Festigkeit in [mm]) des Isolierprofils fixiert wird und an dem Funktionselement eine Normalkraft oder in bestimmten Fällen eine Tangentialkraft angelegt wird, die bis zum Teileversagen (Bruchkraft in [N]) gesteigert wird.

Je nach dem oder den verwendeten Polymerwerkstoff des Isolierstegs und gegebenenfalls der ersten Funktionselemente kann das Schmelzen oder das Anschmelzen in dem Kontaktbereich der Bauteile insbesondere bei einer Temperatur von ca. 95 °C oder mehr, bevorzugt ca. 150 °C oder mehr, weiter bevorzugt ca. 200 °C oder mehr, besonders bevorzugt ca. 250 °C oder mehr, erfolgen.

Diese Temperaturen sind insbesondere in dem Kontakt- oder Fügebereich der zu verbindenden Bauteile, d.h. Profilkörper, Randabschnitte und erste Funktionselemente, von Bedeutung.

Die zu wählende Temperatur liegt vorzugsweise oberhalb der Schmelz- oder einer Erweichungstemperatur eines Polymerwerkstoffes, insbesondere ca. 10 °C oder mehr, weiter bevorzugt ca. 20 °C oder mehr oberhalb dieser Temperaturen. Der relevante Schmelzpunkt lässt sich, falls nicht bekannt, durch kalorimetrische Messungen bestimmen. Eine Erweichungstemperatur lässt sich üblicherweise technischen Datenblättern und Tabellen von Werkstoffen entnehmen oder sie kann z.B. nach einem Vicat-Verfahren, insbesondere nach DIN EN ISO 306 zur Bestimmung der Vicat-Erweichungstemperatur, ermittelt werden.

Alternativ kann/können das oder die ersten Funktionselemente mit dem Profilkörper und/oder dem oder den Randabschnitten des Isolierstegs stoffschlüssig verbunden sein, wobei die stoffschlüssige Verbindung unter Verwendung eines Hilfsstoffes, vorzugsweise eines chemisch vernetzenden Hilfsstoffes z.B. eines Klebstoffes insbesondere eines reaktiven Klebstoffsystems, hergestellt ist und wobei die stoffschlüssige Verbindung weiter bevorzugt nicht schmelzbar ausgebildet ist.

Hierbei ist insbesondere bevorzugt, dass der Hilfsstoff bei Raumtemperatur oder einer höheren Temperatur verarbeitbar ist.

Alternativ kann ein schmelzbarer Hilfsstoff (z.B. Hotmelt oder ein anderes, mit dem Polymerwerkstoff des Isolierprofils kompatibles Polymer) verwendet werden, der eine Erweichungstemperatur und/oder eine Verarbeitungstemperatur von ca. 95 °C oder mehr, bevorzugt ca. 150 °C oder mehr, weiter bevorzugt von 200 °C oder mehr und am meisten bevorzugt von ca. 220 °C, aufweist. Dieser Hilfsstoff kann chemisch derart ausgerüstet sein, dass er nach dem Aufbringen in erweichter oder geschmolzener Form nachträglich vernetzt (z.B. sogenannte reaktive Hotmelt-Systeme).

Gemäß einer weiteren erfindungsgemäßen Alternative kann/können das oder die ersten Funktionselemente mit dem Profilkörper und/oder den Randabschnitten des Isolierstegs stoffschlüssig verbunden sein, wobei die stoffschlüssige Verbindung durch örtlich beschränktes Lösen oder Anlösen des Profilkörpers und/oder des/der ersten Funktionselemente mit einem Lösemittel erfolgt ist und/oder die Verbindung unter Verwendung eines gelösten Polymers hergestellt ist.

Das Konzept der vorliegenden Erfindung ermöglicht des Weiteren Isolierprofile herzustellen, bei denen der Isoliersteg integral mit dem Profilkörper ausgebildete zweite und gegebenenfalls weitere Funktionselemente zusätzlich zu dem oder den ersten Funktionselementen umfasst.

Erfindungsgemäß können die ersten Funktionselemente insbesondere ausgewählt sein aus im Querschnitt planaren, gebogenen, insbesondere teilkreisförmig gebogenen, verzweigt oder abgewinkelt ausgebildeten Flächenelementen und/oder einen oder mehrere Hohlräume umschließenden Elementen. Die Hohlräume können dabei bei Bedarf als geschlossene Hohlräume ausgebildet werden. Insbesondere können die ersten Funktionselemente auch eine teilzylindrische Geometrie aufweisen.

Je nach Bedarf kann ein erfindungsgemäßes Isolierprofil mit ersten Funktionselementen versehen sein, die eine Vielzahl an, gegebenenfalls geschlossenen, Hohlräumen in Längsrichtung des Isolierprofils bilden, wobei die Hohlräume insbesondere aneinandergereiht ausgebildet sein können.

Darüber hinaus kann ein erfindungsgemäßes Isolierprofil erste Funktionselemente aufweisen, wobei das oder die ersten Funktionselemente in Längsrichtung des Isolierprofils gesehen aneinandergrenzende, zueinander abgewinkelte Wandabschnitte aufweisen, welche vorzugsweise im Wesentlichen senkrecht zu dem Profilkörper ausgerichtet sind. Beispielsweise kann so eine Konfiguration mit einer Zickzack-Geometrie des oder der ersten Funktionselemente ausgebildet werden.

Bevorzugt sind erfindungsgemäße Isolierprofile, bei denen das oder die ersten Funktionselemente aus einem Polymermaterial, bevorzugt auf der Basis eines thermoplastischen Polymers, hergestellt sind. Häufig wird ein thermoplastisches Polymer den Hauptbestandteil des Polymerwerkstoffes bilden. Weitere Bestandteile des Polymerwerkstoffes können insbesondere aus Verstärkungsstoffen (z.B. Glas-, Kohle-, Mineral-, Polymerfasern), Füllstoffen (Glas in Form von Glasmehl oder Kugeln oder Hohlkugeln, Kreide, Talk, Holzmehl, Silicate insbesondere Schichtsilicate oder amorphe Kieselsäuren), Additiven (z.B. Stabilisatoren, Gleit- und Schmiermittel, Weichmacher, Schlagzähmodifikatoren, Wärme- und Hitzestabilisatoren, Flammschutzmittel, Koppler, Vernetzer), Farbstoffen (z.B. Farbstoffe oder Pigmente), andere Polymere (z.B. bei Polymerblends) etc. ausgewählt werden.

Das Polymermaterial der Funktionselemente kann dabei auch porös ausgeführt werden.

Wenn eine mechanische Belastung der Funktionselemente bei der Verarbeitung der Isolierprofile oder im Produkteinsatz absehbar ist, kann man Funktionselemente aus festeren/steiferen Werkstoffen vorsehen, bevorzugt sind dann Werkstoffe mit einem E-Modul von ca. 2000 MPa oder mehr, besonders bevorzugt sind Werkstoffe mit einem E-Modul von ca. 3000 MPa oder mehr.

Bei alternativen erfindungsgemäßen Isolierprofilen ist/sind das oder die ersten Funktionselemente auf der Basis eines metallischen Materials gefertigt, wobei das metallische Material insbesondere in Form von Folien oder Blechen, gegebenenfalls in Kombination mit aus Kunststoff gefertigten Funktionsteilen, zum Einsatz kommt.

Weiterhin bevorzugt sind erfindungsgemäße Isolierprofile, bei denen die Oberfläche und/oder ein Kern des oder der ersten Funktionselemente ganz oder teilweise Metall-beschichtet oder metallisiert oder metallisch ausgerüstet ist. Dadurch ist es möglich, z.B. IR-reflektierende Fahnen aus Metall (z.B. aus dünnem Aluminiumblech) auf einem Isoliersteg zu verankern, ohne dass es zu einer Beeinträchtigung der Isolationseigenschaften des Profilkörpers kommt.

Die vorliegende Erfindung betrifft des Weiteren, wie eingangs schon erwähnt, ein Verfahren zur Herstellung eines Isolierprofils. Gemäß dem erfindungsgemäßen Verfahren wird/werden zunächst der oder die Profilkörper mit den Randabschnitten einstückig und hiervon separat das oder die ersten Funktionselemente hergestellt und in einem nachgelagerten Schritt der oder die Profilkörper mit dem oder den ersten Funktionselementen, gegebenenfalls über die Randabschnitte, stoffschlüssig verbunden.

Die separat hergestellten Elemente des Isolierprofils lassen sich nicht nur für eine spezielle Geometrie eines Isolierprofils nutzen. Beispielsweise kann der Isoliersteg des Isolierprofils mit einer standardisierten Bauhöhe je nach Bedarf mit unterschiedlichen Funktionselementen kombiniert werden und so eine breite Palette an Profilgeometrien realisiert werden, ohne dass für jede einzelne Profilgeometrie ein spezielles, insbesondere komplexes, Extrusionswerkzeug hergestellt werden müsste.

Ebenso können Funktionselemente mit verschieden ausgestalteten Isolierstegen kombiniert werden und so auch das einzelne Funktionselement in unterschiedlichen Isolierstegen genutzt werden. Auch dies minimiert die Werkzeugkosten.

Schließlich kann aufgrund der erfindungsgemäß erhaltenen Flexibilität in der Verwendung der Bauteile, d.h. Isoliersteg/Profilkörper und Funktionselemente, zusätzlich ein wirtschaftlicher Vorteil erzielt werden, da die einzelnen Bauteile bzw. die Komponenten in geringerer Teile-Komplexität und in größeren Mengen hergestellt und verwendet werden können.

Bei dem erfindungsgemäßen Verfahren wird vorzugsweise die stoffschlüssige Verbindung des oder der ersten Funktionselemente mit dem Profilkörper und/ oder den Randabschnitten mittels Schweißen, bevorzugt Ultraschallschweißen, Laserschweißen, Infrarotschweißen, Heizelementschweißen oder Warmgasschweißen, insbesondere Hilfsstoff-frei hergestellt.

Es hat sich überraschend herausgestellt, dass sich erfindungsgemäße Isolierprofile auch beim Einsatz der Schweißtechnologie, insbesondere dem Ultraschallschweißen, dem Infrarotschweißen und dem Laserschweißen, ohne Beeinträchtigung der für die Anwendung relevanten mechanischen Eigenschaften der verwendeten Werkstoffe fertigen lassen. Auch bleibt bei diesen erfindungsgemäßen Verfahren die Geometrie der verarbeiteten Bauteile, d.h. insbesondere des Isolierstegs und den ersten Funktionselementen, mit den vorgegebenen Toleranzen erhalten. Dies gilt insbesondere auch beim Einsatz von faserverstärkten Polymerwerkstoffen.

Die Verschweißung von zwei Fügepartnern erfolgt durch eine Plastifizierung des Polymerwerkstoffes im Kontaktbereich der Fügepartner. Je nach Verfahren wird dabei eine unterschiedliche Menge an plastifiziertem Polymerwerkstoff erzeugt, bzw. die Lage und die lokale Ausdehnung des plastifizierten Werkstoffes wird unterschiedlich sein. Ebenfalls hat die Art und Zusammensetzung des Werkstoffes sowie die eingebrachte Energiemenge, die Dauer (Vorwärm-, Heiz-, Anpress-, Haltedauer), der angelegte Druck bzw. Anpressdruck auf die Fügepartner Einfluss auf die Ausbildung der Verschweißung. So wird z.B. beim Ultraschallschweißen ein Fügepartner bevorzugt mit einem Energierichtungsgeber versehen, dieser ist häufig durch eine Verjüngung, z.B. durch eine keilförmig zulaufende Spitze gekennzeichnet, die dann in Kontakt mit dem anderen Fügepartner gebracht wird. Durch Einleitung von Energie in Form von Ultraschallschwingungen und gleichzeitiges Anlegen eines Anpressdrucks wird, ausgehend von der Verjüngung des Energierichtungsgebers, der Polymerwerkstoff beider Fügepartner aufgeschmolzen. Dadurch schmilzt insbesondere auch die Verjüngung des Energierichtungsgebers ab und die entstehende Schmelze im Fügebereich weicht dem Anpressdruck aus und wird ggf. in freie Seitenrichtungen ausgetrieben. Dabei bildet sich temporär eine plastifizierte Zone im Fügebereich aus, die nach Erkalten/Erstarren des Polymerwerkstoffes im Regelfall keine eindeutige Zuordnung mehr zu einem der Fügepartner erlaubt.

Durch eine entsprechende Auslegung der Energierichtungsgeber sind der Energieeintrag, die Qualität und insbesondere die Festigkeit der Schweißnaht steuerbar. Ebenso kann damit gesteuert werden, ob und wieviel Schmelze aus der Fügezone ausgetrieben wird.

Bevorzugt sind eine Anspitzung des Energierichtungsgebers mit einem Winkel von 30° bis 90° und eine verfügbare Höhe der Spitze von 200 µm bis 1,5 mm. Es sind aber auch stumpfe oder abgerundete, bzw. mit Radien oder Stufen versehene Energierichtungsgeber möglich. Die Verwendung von solchen Stufen ermöglicht es die Höhe des "Abschmelzens" im Schweißprozess vorzugeben, da eine Stufe dann als begrenzender Anschlag funktioniert.

Die Einleitung der Ultraschallenergie kann dann sowohl auf Seite des Fügepartners mit Energierichtungsgeber als auch auf der abgewandten Seite, also durch den zweiten Fügeparter ohne Energierichtungsgeber erfolgen. Ebenso kann eine Einleitung erfolgen, wenn kein Energierichtungsgeber vorhanden ist. Die Verortung der Energieeinleitung wird von einen Fachmann sinnvoll gewählt, nach Möglichkeit soll die Energieeinleitung in der Nähe der Kontaktzone der Fügepartner bzw. der Fügezone erfolgen, bevorzugt ist ein Abstand der Sonotrode von der Fügezone von ca. 30 mm oder weniger, besonders bevorzugt ist ein Abstand von ca. 10 mm oder weniger. Ebenfalls wird bevorzugt darauf geachtet, dass in direkter Linie zwischen Sonotrode am Ort der Energieeinleitung und der Fügezone nach Möglichkeit keine Hohlkammern bzw. konstruktiv eingefügte Hohlräume vorliegen. Die Einleitung der Ultraschallenergie in massive Werkstoffe und/oder die Weiterleitung der Ultraschallenergie in geradliniger Richtung durch den ersten Fügepartner bis zur Fügezone ist weiter bevorzugt. Von geradliniger Ein- bzw. Weiterleitungsrichtung weicht man insbesondere ab, wenn z.B. über eine geometrisch verzweigte Struktur, z.B. ein Hohlkammerprofil einleitet.

Die Einleitung der Energie erfolgt in einer ersten Ausführungsform bevorzugt über eine statische Sonotrode die z.B. in Form einer Schleifkufe oder einer Rolle ausgeführt ist, der/die Fügepartner werden dann üblicherweise im permanenten Kontakt zur Sonotrode an dieser vorbeigeführt. Die Verschweißung wird bei dieser Variante dann an einem kontinuierlich bewegten Isolierprofil durchgeführt.

Ebenso ist in einer weiteren Ausführungsvariante ein Fertigungszyklus mit einer mitlaufenden Sonotrode denkbar, diese läuft zuerst im Kontakt mit dem/den Fügepartner/-n in Förderrichtung mit, anschließend ohne Kontakt zu dem Fügepartnern zurück in eine Ausgangsposition, um dann den Zyklus erneut zu beginnen. Die Verschweißung wird bei dieser Variante ebenfalls an einem kontinuierlich bewegten Isolierprofil durchgeführt.

Weiter ist eine Ausführungsvariante denkbar bei der die Sonotrode/n nur eine Hubbewegung ausführen, während die Fügepartner schrittweise in Förderrichtung getaktet werden. Die Verschweißung wird bei dieser Variante dann an einem unbewegten stillstehenden Isolierprofil durchgeführt.

Bei diesen Varianten kann der Anpressdruck und/oder der Ultraschall-Energieeintrag konstant gehalten oder zeitlich verändert werden. Der Anpressdruck kann bevorzugt auch zyklisch ansteigend und abfallend zum Schweißtakt gewählt werden.

Der Anpressdruck wirkt von Sonotrode über die Fügepartner zu einem entgegengesetzten Anschlag bzw. einem Amboss. Dieser Amboss kann ebenfalls in Form von Rollen, Schleifkufen o.ä. ausgelegt sein.

Das schon genannte Infrarotschweißen ist ebenfalls ein geeignetes Verfahren um Polymerwerkstoffe bei der Herstellung der erfindungsgemäßen Isolierprofile zu verschweißen. Hierbei wird mittels Wärmestrahlung (Infraroter Strahlung, IR) eine Erwärmung, Erweichung, An- oder Aufschmelzung des/der Polymerwerkstoffe/-s erreicht, bevorzugt mit Strahlungsanteilen im kurzwelligen oder im mittelwelligen IR-Wellenlängenbereich von 0,78 µm bis 1,4 µm bzw. 1,4 µm bis ca. 4 µm.

Die Infrarotstrahlung kann dabei flächig oder auch fokussiert, z.B. nur in den Bereich der Fügezone eines oder beider Fügepartner, eingebracht werden. Geeignete Infrarotstrahler sind kommerziell erhältlich und können sowohl an diverse geometrische Konturen als auch an diverse verfahrenstechnische Anwendungsfelder angepasst werden.

In einer bevorzugten Ausführungsform wird man eine oder mehrere IR-Strahlungsquelle/-n parallel zur Längsrichtung des oder der Fügepartner ausrichten. Dadurch lassen sich z.B. in einem kontinuierlichen in-line Prozess genau die potentiellen Fügezonen auf wenige mm genau bestrahlen, während die Fügepartner im Produktionsprozess weitergefördert werden. Ebenfalls ist das Infrarotschweißverfahren für Kunststoffprofile auch als diskontinuierlicher Prozess umsetzbar.

Durch die Anpassung diverser Parameter wie z.B. Strahler-Leistung, Wellenlänge, Abstand des Strahlers zur bestrahlten Oberfläche oder Verweilzeit des Fügepartners im bestrahlten Bereich (abhängig u.a. von Länge des IR-Strahlers in Förderrichtung, Fördergeschwindigkeit des Fügepartners, ggf. Haltezeiten unter dem Strahler) lassen sich gezielt die gewünschten Schweißbedingungen, wie z.B. das Ausmaß der Plastifizierung (Oberflächentemperatur des bestrahlten Fügepartners, Temperatur der Schmelze, Flächen- und Tiefen-Ausdehnung der Schmelze), einstellen. Diese Schweißbedingungen sind materialspezifisch. Bevorzugt werden beide Fügepartner oberflächlich angeschmolzen. Die Fügepartner können dabei Hilfsstoff-frei sein, ebenso ist es aber möglich, auf einem oder beiden Fügepartnern einen Hilfsstoff aufzubringen oder einen Hilfsstoff zuzuführen.

Nachdem die Bestrahlung erfolgt ist und gute Schweißbedingungen vorliegen, werden die Fügepartner dann zügig (z.B. binnen fünf Sekunden, bevorzugt binnen einer Sekunde) in die gewünschte Relativposition gebracht. In der Regel wird dazu die Strahlungsquelle entfernt oder die Fügepartner werden aus dem Bereich der Strahlungsquelle/-n gefördert. Die Fügepartner werden dann auf Kontakt angenähert und gegeneinander verpresst während einer oder beide Fügepartner noch eine plastifizierte Fügezone aufweist bzw. aufweisen.

Die Positionierung der beiden Fügepartner kann durch geometrische Begrenzungen erfolgen, z.B. Führungs- und Anschlagselemente in Form von Rollen, Schienen, Förderbänder oder Matrizen.

Das Verpressen kann unterteilt werden in ein Anpressen und ein Halten, wobei jeweils eine statische oder variable Anpresskraft (F_{A}) bzw. Haltekraft (F_{H}) ausgeübt wird. Eine Steuerung des Verpress-Prozesses kann dabei Kraft-gesteuert (eine Kraft F wird als Ziel vorgegeben, der Weg, bzw. die Verpresstiefe ergibt sich daraus von selbst) oder Weg-gesteuert (ein Weg, bzw. eine Verpresstiefe wird vorgegeben, das System bringt die dazu nötige Kraft auf) erfolgen.

Die nötigen Einwirkzeiten der Kräfte F_{A} und F_{H} sind abhängig von den diversen Rahmenbedingungen (Werkstoffauswahl, Geometrien, Schweißtemperaturen, Art der Krafteinleitung etc.), wichtig hierbei ist jedoch, dass die Kraft F_{H} ausreichend lange wirkt um ein Lösen der Fügeverbindung zu vermeiden. Üblicherweise lässt man F_{H} so lange wirken, bis die plastifizierten Bereiche der Fügezone wieder erstarrt sind, insbesondere lässt man F_{H} so lange wirken, bis die Temperatur der Fügezone unter die Erstarrungstemperatur oder unter die Kristallisationstemperatur oder unter die Glasübergangstemperatur gefallen ist.

Die Kräfte können beispielsweise über Rollen, Walzen, Stempel, Schleifkufen, Raupenbänder etc. auf die Fügepartner eingeleitet werden.

Die Fügeparameter, insbesondere Anpress- und Haltekräfte, sowie die jeweilige Dauer wird ein Fachmann für den jeweiligen Anwendungsfall sinnvoll und schnell ermitteln.

Alternativ zu o.g. Verbindungsformen kann erfindungsgemäß die stoffschlüssige Verbindung des oder der ersten Funktionselemente mit dem Profilkörper und/oder den Randabschnitten mittels Kleben, bevorzugt mittels Lösemittelkleben, oder unter Verwendung von Schmelzklebstoffen, lösemittelbasierten Klebstoffen, Kontaktklebstoffen oder härtenden Einkomponenten(1K)- oder Zweikomponenten(2K)-Klebstoffsystemen hergestellt werden.

Es gibt für viele Polymere geeignete Lösemittel, somit lassen sich auch von diesen Polymeren abgeleitete Polymerwerkstoffe in ausreichendem Maße durch Lösemittel kleben. Dabei wird z.B. durch lokales Aufbringen von Lösemittel auf die Fügepartner der Polymerwerkstoff angelöst. Bringt man diese Fügepartner dann fest zusammen, so bildet sich nach Entfernung/Zersetzung/ Neutralisation des Lösemittels (Erhitzen, Ablüften o.ä.) eine feste Verbindung aus indem die Polymerketten zwischen den Fügepartnern durch Diffusionsprozesse verschlaufen. Ebenso kann zwischen die Fügepartner ein in Lösemittel gelöstes Polymer eingebracht werden. Das gelöste Polymer kann identisch, ähnlich oder anders als der Polymerwerkstoff der Fügepartner sein. Bevorzugt handelt es sich bei dem gelösten Polymer um einen Lösemittelklebstoff.

Bekannte Systeme, die geeignet sind um unter Zuhilfenahme von Lösemitteln verklebt zu werden, sind u.a.
- aromatische Lösemittel, z.B. Toluol oder Xylol oder halogenierte Lösemittel, z.B. Chloroform oder Dichlorethylen, für die Polymere Polyphenylenether oder
- organische Lösemittel, z.B. aromatische Lösemittel wie Toluol, Xylol, halogenierte Lösemittel wie Methylenchlorid, Chloroform oder polare Lösemittel z.B. Butylacetat, Methylethylketon für Polystyrol (alle Taktizitäten) oder für ABS-Werkstoffe (Acrylnitril-Butadien-Styrol),
- die Lösemittel Cyclohexanon oder Tetrahydrofuran für das Polymer Polyvinylchlorid,
- diverse organische oder anorganische Säuren, z.B. Ameisensäure oder Phosphorsäure, sowie organische, bevorzugt aromatische Lösemittel, z.B. Resorcin für Polyamide.

Gemäß dem erfindungsgemäßen Verfahren kann die stoffschlüssige Verbindung zwischen dem oder den ersten Funktionselementen und dem Profilkörper und/ oder Randabschnitt entlang der Längsrichtung des Isolierprofils kontinuierlich, abschnittsweise oder punktuell erfolgen.

Erfindungsgemäß kann der Isoliersteg, insbesondere dessen Profilkörper, bei seiner Fertigung oder in einem nachgelagerten Schritt zunächst mit einem oder mehreren Montageelementen versehen werden, an den/die das oder die ersten Funktionselemente angeschlossen werden.

Das erfindungsgemäße Verfahren lässt eine Vielzahl von Variationen zu, so dass die weiteren Funktionselemente nicht nur mit dem Profilkörper oder den Randabschnitten, sondern auch mit dem oder den ersten Funktionselementen stoffschlüssig verbunden werden können. Insbesondere kann ein erfindungsgemäßes Isolierprofil auch aus zwei oder mehr Isolierstegen zusammengesetzt sein, und der jeweilige Isoliersteg kann zwei oder mehr Profilkörper umfassen.

Nach einer weiteren Variante des erfindungsgemäßen Verfahrens kann der Profilkörper mit den Randabschnitten und/oder die Funktionselemente als Endlosmaterial bereitgestellt werden und nach der Herstellung der stoffschlüssigen Verbindung derselben das Isolierprofil durch einen Schneide-, Stanz- oder Fräsprozess auf eine vorgegebene Länge abgelängt werden.

Bevorzugt wird/werden hierbei das Endlosmaterial oder die Endlosmaterialien auf Rollen, Spulen oder Haspeln bereitgestellt.

Alternativ kann bei dem erfindungsgemäßen Verfahren der Profilkörper mit den Randabschnitten und/oder die Funktionselemente vor der Herstellung der stoffschlüssigen Verbindung in Form von Stangenware bereitgestellt werden.

Diese und weitere Vorteile der Erfindung werden im Folgenden anhand der Zeichnung noch näher erläutert. Es zeigen im Einzelnen:
- Figuren 1A bis 1C: drei Varianten einer ersten Ausführungsform der erfindungsgemäßen Isolierprofile;
- Figuren 2A bis 2C: drei weitere Varianten der ersten Ausführungsform der erfindungsgemäßen Isolierprofile;
- Figur 3: eine weitere Variante der ersten Ausführungsform der erfindungsgemäßen Isolierprofile;
- Figuren 4 und 5: verschiedene beispielhafte Varianten der Herstellung erfindungsgemäßer Isolierprofile;
- Figur 6: weitere Varianten erfindungsgemäßer Isolierprofile, die mittels Ultraschallschweißen hergestellt werden, sowie eine schematische Darstellung für dieses Verfahren;
- Figur 7: eine Variante der ersten Ausführungsform der erfindungsgemäßen Isolierprofile im Vergleich mit weiteren Ausführungsformen erfindungsgemäßer Isolierprofile;
- Figur 8: eine weitere Ausführungsform eines erfindungsgemäßen Isolierprofils;
- Figur 9: weitere Ausführungsformen der erfindungsgemäßen Isolierprofile und deren Herstellung;
- Figuren 10 und 11: weitere Ausführungsformen der erfindungsgemäßen Isolierprofile;
- Figur 12: eine weitere Ausführungsform der erfindungsgemäßen Isolierprofile;
- Figuren 13 und 14: weitere Ausführungsformen der erfindungsgemäßen Isolierprofile und deren Herstellung;
- Figur 15: drei Varianten von Isolierstegen für die Herstellung von erfindungsgemäßen Isolierprofilen;
- Figuren 16 und 17: zwei weitere Ausführungsformen eines erfindungsgemäßen Isolierprofils und deren Herstellung;
- Figur 18: vier Varianten von Übergangsbereichen bzw. Fügezonen von herkömmlichen und erfindungsgemäßen Isolierprofilen;
- Figur 19: weitere Ausführungsform einer Fügezone eines erfindungsgemäßen Isolierprofils;
- Figur 20: eine Variante einer Prüfvorrichtung für Isolierprofile zur Bestimmung der Festigkeit eines erfindungsgemäß angefügten Funktionselementes;
- Figur 21: eine schematische Darstellung eines Verfahrens zum Infrarotschweißen bei der Herstellung eines erfindungsgemäßen Isolierprofils;
- Figur 22: ein schematisch dargestellter Prozessablauf eines Verfahrens zur Herstellung erfindungsgemäßer Isolierprofile;
- Figur 23: eine Ausführungsform eines erfindungsgemäßen Isolierprofils mit der Funktion eines Fassadenabstandhalters in mehreren Variationen;
- Figur 24: eine weitere Ausführungsform eines erfindungsgemäßen Isolierprofils mit der Funktion eines Fassadenabstandhalters in mehreren Variationen; und
- Figur 25: eine weitere Ausführungsform des erfindungsgemäßen Isolierprofils mit der Funktion eines Fassadenabstandhalters in mehreren Variationen.

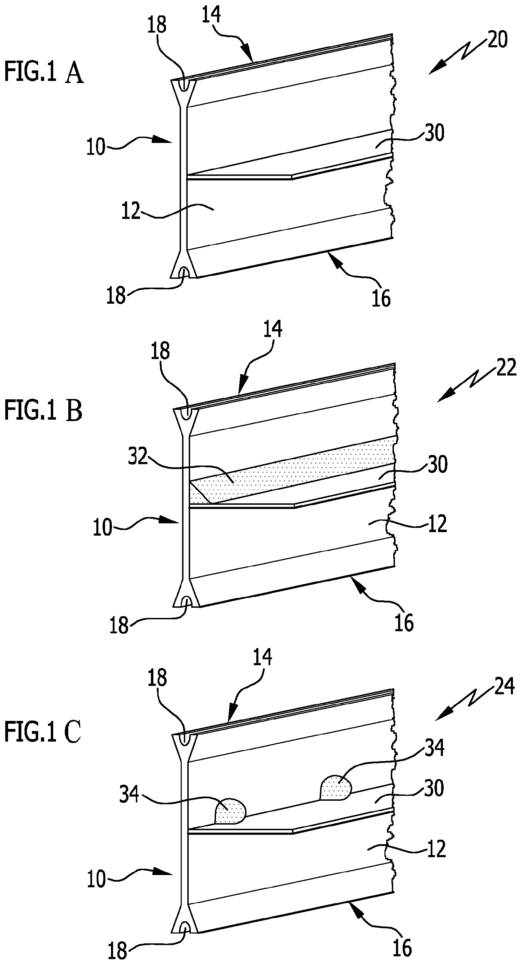

Figur 1 zeigt eine erste Ausführungsform der erfindungsgemäßen Isolierprofile in verschiedenen Varianten, die jeweils auf einem Isoliersteg 10 mit einem planen Profilkörper 12 basieren. An den Profilkörper 12 schließen sich Randabschnitte 14, 16 an, welche als Einrollköpfe ausgebildet sind. Die Randabschnitte 14, 16 verlaufen ebenfalls in Längsrichtung des erfindungsgemäßen Isolierprofils und sind quer zur Längsrichtung beabstandet an den Außenrändern des Profilkörpers 12 angeformt. Die Herstellung solcher Isolierstege 10 aus einem Polymerwerkstoff ist mit großer Genauigkeit der Querschnittsgeometrie und hoher Linearität in einem Extrusionsschritt ohne größeren Aufwand wirtschaftlich möglich. Die dafür erforderlichen Extrusionswerkzeuge sind wenig komplex und auch relativ kostengünstig erhältlich.

Die als Einrollköpfe ausgebildeten Randabschnitte 14, 16 können bei der Verarbeitung des erfindungsgemäßen Isolierprofils in Metall-Kunststoff-Verbundprofilen in entsprechende Nuten der Metallprofile eingeschoben und mit diesen bei Bedarf in einem sogenannten Einrollschritt schubfest verbunden werden.

Die Randabschnitte 14, 16 können, wie in den Figuren 1A bis 1C gezeigt, darüber hinaus eine Nut 18 aufweisen, in welche ein sogenannter Schmelzdraht (nicht gezeigt) eingelegt werden kann. Vorzugsweise wird der Schmelzdraht in der Nut 18 im Form- und/oder Kraftschluss gehalten. Nach Herstellung der Einrollverbindung kann der Schmelzdraht durch Erwärmen, z.B. im Pulverlack-Einbrennprozess, zur weiteren Sicherung der schubfesten Verbindung des Isolierprofils mit dem Metallprofil aktiviert werden.

In den Figuren 1A, 1B und 1C sind drei Varianten erfindungsgemäßer Isolierprofile 20, 22 bzw. 24 einer ersten Ausführungsform gezeigt, bei denen jeweils mit dem planen Profilkörper 12 des Isolierstegs 10, im Wesentlichen mittig zu dessen Querrichtung, ein erstes streifenförmiges Funktionselement 30 verbunden ist.

Das erste Funktionselement 30 der Isolierprofile 20, 22, 24 ist separat gefertigt und wird anschließend mit dem Isoliersteg 10 bzw. dessen Profilkörper 12 verbunden. Auch für die Fertigung des ersten Funktionselements 30 stehen dem Fachmann kostengünstige Fertigungsverfahren zur Verfügung, beispielsweise die Extrusion, falls das erste Funktionselement aus einem Polymerwerkstoff gefertigt wird. Ebenso kann das Funktionselement aus einem großflächigen Bahnmaterial (z.B. Blasfolie, kalandrierten Platte oder Folie) entstammen, welches dann passend zugeschnitten, gestanzt und oder umgeformt wird.

Die Verbindung des ersten Funktionselements 30 mit dem jeweiligen Profilkörper 12 kann in unterschiedlicher Weise geschehen, und hierfür zeigen die Figuren 1A, 1B und 1C schematisch drei verschiedene Beispiele auf.

Gemäß Figur 1A wird das Funktionselement 30 mit dem Isoliersteg 10 im Wesentlichen kontinuierlich über eine sich auf die Kante des Funktionselements 30 beschränkende Verbindung, z.B. eine Schweißnaht zur Bildung des Isolierprofils 20 verbunden, wobei dies bei einer ausreichenden Kompatibilität der Polymerwerkstoffe, aus denen der Isoliersteg und das erste Funktionselement geformt sind, gegebenenfalls ohne Zusatz von Hilfsstoffen geschehen kann.

In Figur 1B findet die Verbindung von Isoliersteg 10 und dem ersten Funktionselement 30 zur Herstellung des Isolierprofils 22 mittels eines Hilfsstoffes statt, der als kontinuierlicher Strang 32 appliziert ist.

Des Weiteren kann die Verbindung zwischen dem Isoliersteg 10 und dem ersten Funktionselement 30 mittels in vorgegebenen, insbesondere in regelmäßigen Abständen (punktuell oder abschnittsweise) applizierten Hilfsstoffes 34 hergestellt werden.

Die Verbindungstechnik gemäß den Figuren 1A und speziell 1B und 1C kann auch dann zur Anwendung kommen, wenn die Materialien des Isolierstegs und des ersten Funktionselements nicht miteinander kompatibel sind, und insbesondere auch dann, wenn für die Herstellung des ersten Funktionselements kein Polymerwerkstoff, sondern beispielsweise ein metallischer Werkstoff, beispielsweise in Form einer Metallfolie oder eines Metallblechs, zum Einsatz kommt.

Die Verbindung zwischen dem Isoliersteg 10 und dem ersten Funktionselement 30 muss häufig lediglich so stabil sein, dass das Isolierprofil 20, 22 bzw. 24 während des Transports und der Verarbeitung bis zum Metall-Kunststoff-Verbundprofil sicher gewährleistet ist, da das in den Figuren 1A bis 1C gezeigte erste Funktionselement 30 im verbauten Zustand häufig keine Kräfte aufnehmen muss und beispielsweise lediglich der Unterdrückung von Konvektionsströmungen im Inneren eines Metall-Kunststoff-Verbundprofils dient.

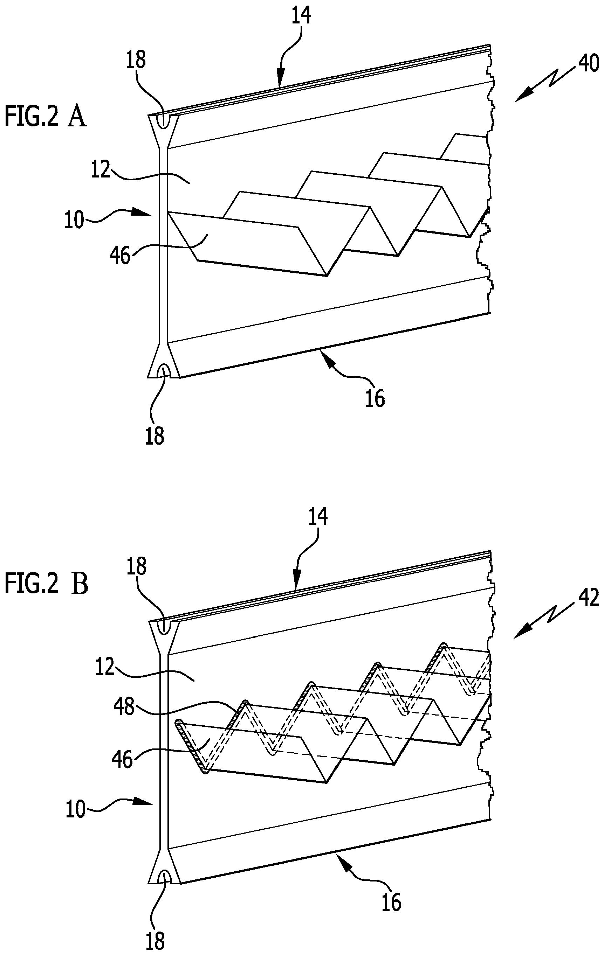

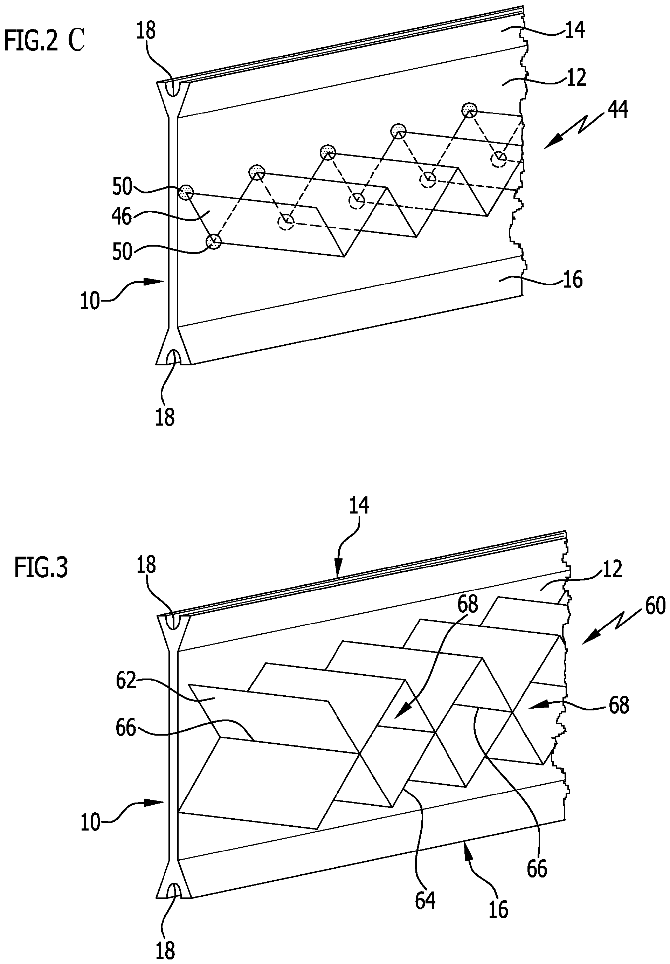

Die Figur 2 zeigt drei weitere Varianten der ersten Ausführungsform der erfindungsgemäßen Isolierprofile, jeweils basierend auf einem Isoliersteg 10 mit einem Profilkörper 12, und an diesen angeformte Randabschnitte 14, 16, wie dies bereits im Zusammenhang mit der Figur 1 beschrieben wurde.

Als erstes Funktionselement 46 dient bei der Variante gemäß Figur 2A ein in Draufsicht zu einer Zickzacklinie gefaltetes Flachmaterial, welches, wie im Zusammenhang mit der Figur 1A beschrieben, ohne Verwendung eines Hilfsstoffes mit dem Isoliersteg 10 zu einem Isolierprofil 40 verbunden werden kann, wenn das erste Funktionselement 46 aus einem mit dem Polymerwerkstoff des Isolierstegs 10 kompatiblen Werkstoff hergestellt ist.

Die Figur 2B zeigt eine weitere Variante eines erfindungsgemäßen Isolierprofils 42, bei dem an dem Isoliersteg 10 das erste Funktionselement 46 mittels eines Hilfsstoffes 48 in Form eines Stranges ausgebracht ist, der sich entlang der gesamten an dem Isoliersteg 10 anliegenden Kontur des ersten Funktionselements 46 erstreckt. Alternativ könnte der Hilfsstoff 48 des Stranges auch nur abschnittsweise mit vorgegebenen Abständen ausgebracht werden (nicht gezeigt) oder, wie in Figur 2C gezeigt, das erste Funktionselement 46 mit einem lediglich punktuellen Auftrag 50 eines Hilfsstoffes mit dem Isoliersteg 10 verbunden werden.

Der punktuelle Auftrag des Hilfsstoffes in Figur 2C hat im Vergleich zu Figur 2B positiven Einfluss auf die Dämmwirkung des Isolierprofils, vor allem wenn ein Haarspalt zwischen Funktionselement und Profilkörper ausgebildet wird und eine Verbindung ausschließlich über den Hilfsstoff erfolgt. Durch diese Maßnahme wird vermieden, dass neben dem Wärmestrom im Basisprofil auch ein signifikanter Anteil des Wärmestroms über das Funktionselement fließt. Durch die reduzierte Fügefläche wird jedoch gleichzeitig auch weniger Festigkeit in der Verbindungzone realisiert.

Wie im Zusammenhang mit der Beschreibung der Figuren 1B und 1C erwähnt, kann im Fall der Varianten der Figuren 2B und 2C ebenfalls eine breitere Palette an Werkstoffen für die Herstellung des ersten Funktionselements 46 verwendet werden, da über den Hilfsstoff, der in Form des Strangs 48 oder in Form des punktuellen Auftrags 50 eine ausreichende Verbindung zwischen dem ersten Funktionselement 46 und dem Isoliersteg 10 hergestellt werden kann.

Figur 3 zeigt eine weitere Variante der ersten Ausführungsform in Form eines erfindungsgemäßen Isolierprofils 60, bei dem zwei erste Funktionselemente 62, 64, die beide, ähnlich wie die ersten Funktionselemente 46 der Varianten der Figuren 2A bis 2C, in Zickzackform ausgebildet sind.

Die beiden ersten Funktionselemente 62, 64 treffen mit ihren unten bzw. oben liegenden Kanten in regelmäßigen Abständen an Verbindungslinien 66 aufeinander und können bei Bedarf zur Erhöhung der mechanischen Stabilität an, gegebenenfalls entlang dieser Kontaktstellen 66 miteinander stoffschlüssig verbunden werden.

Die Verwendung von zwei ersten Funktionselementen 62, 64, wie in Figur 3 gezeigt, ist insbesondere dann von Vorteil, wenn die Bauhöhe, d.h. der Abstand der Randabschnitte 14, 16, des Isolierstegs 10 relativ hoch ist, so dass ein von einem Metall-Kunststoff-Verbundprofil eingegrenzter Hohlraum durch die sich zwischen den ersten Funktionselementen 62 und 64 bildenden Kammern 68 in viele Einzelsegmente unterteilt ist, in denen eine Konvektion effektiv unterdrückt wird.

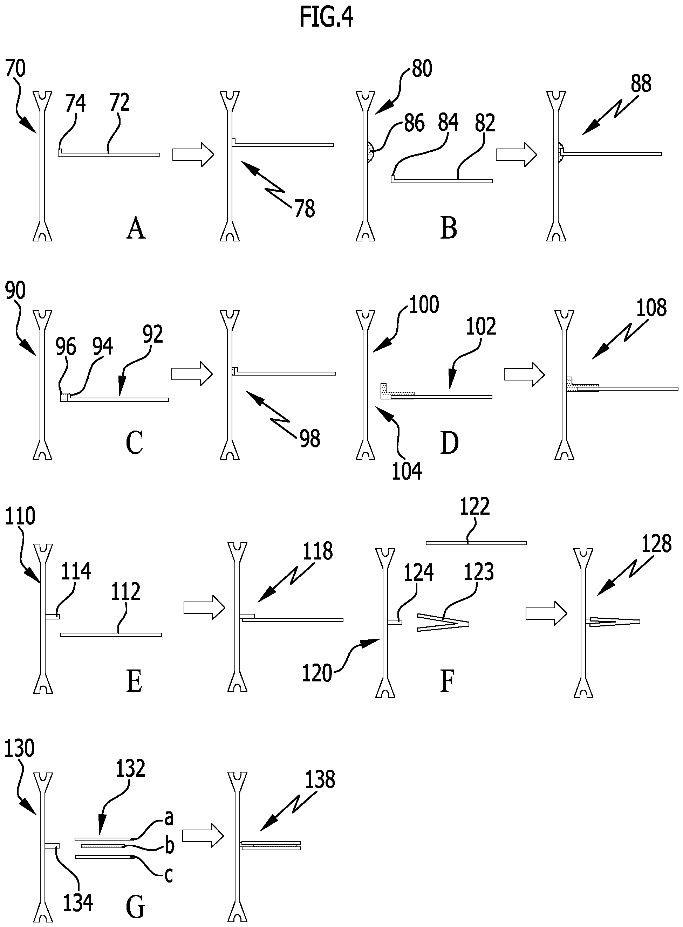

Figur 4 zeigt in verschiedenen beispielhaften Varianten Herstellungsmöglichkeiten der erfindungsgemäßen Isolierprofile.

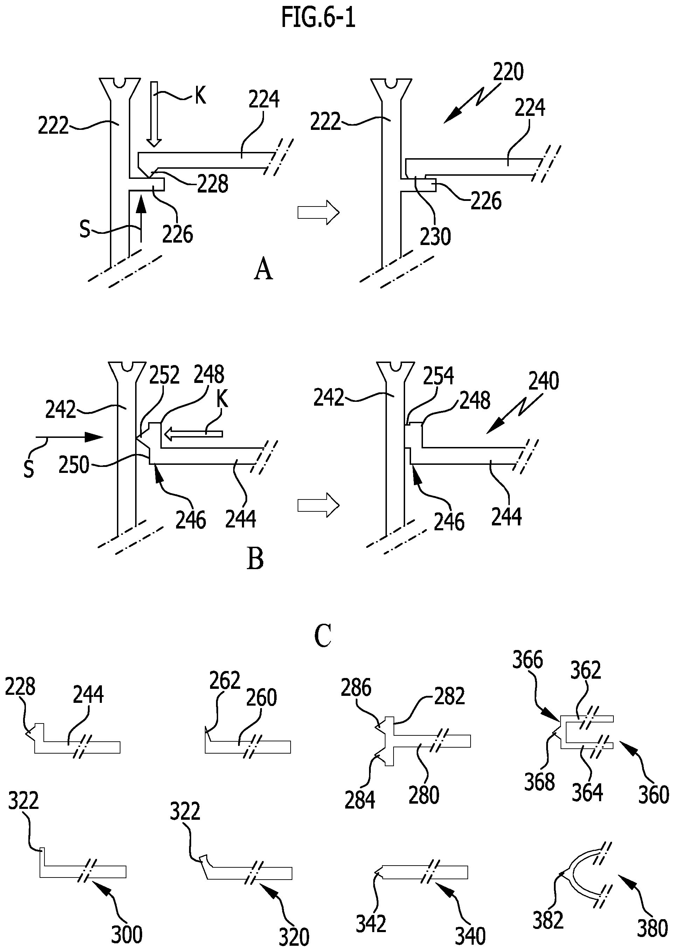

Gemäß der Variante A der Figur 4 wird ein Isoliersteg 70 mit einem ersten Funktionselement 72 zur Herstellung eines erfindungsgemäßen Isolierprofils 78 ohne Verwendung eines Hilfsstoffes verbunden. Das erste Funktionselement 72 ist dabei an dem Rand, der mit dem Isoliersteg 70 verbunden werden soll, mit einem senkrecht abstehenden Vorsprung 74 versehen, so dass die Kontakt- oder Fügefläche, über die die Verbindung zwischen dem Isoliersteg 70 und dem ersten Funktionselement 72 erfolgen kann, vergrößert ist und so eine bessere mechanische Festigkeit der Verbindung resultiert. Der Vorsprung kann für die Anwendung spezifisch gestaltet werden, insbesondere kann er vergrößert, verkleinert oder komplett entfernt werden, wie es auch schematisch in Figur 6-1 C gezeigt wird.

Gegebenenfalls kann das Funktionselement 72 im Bereich des Vorsprungs 74 oder auch insgesamt zweilagig ausgeführt werden, wobei die mit dem Isoliersteg 70 in Kontakt tretende Oberfläche dann ein Material umfasst, mit dem eine Hilfsstoff-freie Verbindung zu dem Isoliersteg hergestellt werden kann. Dies ermöglicht eine erneut breitere Variationsmöglichkeit bezüglich des Werkstoffs, aus dem das Funktionselement 72 überwiegend hergestellt werden soll.

Gemäß der Variante B wird der Isoliersteg 80 mit einem ersten Funktionselement 82 versehen und bildet dann das Isolierprofil 88.

Das erste Funktionselement 82 weist an seinem mit dem Isoliersteg 80 zu verbindenden Rand wiederum einen senkrecht abstehenden Vorsprung 84 auf, der über einen auf dem Isoliersteg 80 aufgetragenen Hilfsstoff 86 stoffschlüssig verbunden wird. Der Vorsprung kann natürlich auch hier anwendungsspezifisch angepasst werden wie es bereits für Figur 4 A beschrieben wurde.

Der Hilfsstoff 86 kann wieder als durchgehender Strang entlang der Länge des Isolierstegs 80, in bestimmten Abschnitten und mit vorgegebenen Abständen oder auch punktförmig ausgebracht sein, je nachdem, welche Festigkeit der jeweilige Anwendungszweck für die Verbindung zwischen dem Isoliersteg 80 und den Funktionselement 82 erfordert.

Gemäß der Variante C der Figur 4 wird wiederum ein Isoliersteg 90 mit einem ersten Funktionselement 92 verbunden, wobei der mit dem Isoliersteg 90 zu verbindende Rand des ersten Funktionselements 92 einen senkrecht abstehenden Vorsprung 94 aufweist, der mit einer Lage eines Hilfsstoffs 96 versehen ist. Durch das Zusammenfügen des Isolierstegs 90 und des ersten Funktionselements 92 wird dann unter Zuhilfenahme des Hilfsstoffes 96 das Isolierprofil 98 gebildet.

Die weitere Variante D der Figur 4 verwendet einen Isoliersteg 100 sowie ein erstes Funktionselement 102, welches an einer mit dem Isoliersteg 100 zu verbindenden Kante mit einem L-förmigen Verbindungselement 104 versehen ist.

Das L-förmige Verbindungselement 104 ist mit dem längeren Schenkel mit dem ersten Funktionselement 102 verbunden, während der dazu senkrecht abstehende kürzere Schenkel der Verbindung des ersten Funktionselements 102 mit dem Isoliersteg 100 dient. So kann gegebenenfalls ebenfalls Hilfsstoff-frei aus dem Isoliersteg 100 und dem ersten Funktionselement 102 das erfindungsgemäße Isolierprofil 108 gebildet werden.

Gemäß der Variante E der Figur 4 wird ein Isoliersteg 110 verwendet, der zur Verbindung mit einem ersten Funktionselement 112 in etwa mittig gesehen mit einem Montagevorsprung 114 versehen ist.

Der Montagevorsprung 114 kann einstückig mit dem Isoliersteg 110 ausgebildet werden oder nachträglich an den Isoliersteg 110 angeformt bzw. mit diesem verbunden werden. Die Verbindung zwischen dem Montagevorsprung 114 und dem ersten Funktionselement 112 kann wiederum Hilfsstoff-frei geschehen, wenn die Materialien des Vorsprungs 114 und des ersten Funktionselements 112 ausreichend miteinander kompatibel sind und so das Isolierprofil 118 bilden.

Wird eine größere Variationsbreite in der Auswahl der jeweiligen Werkstoffe zur Herstellung des Isolierstegs 110 einerseits und des ersten Funktionselements 112 andererseits benötigt, kann die Verbindung zwischen dem Isoliersteg 110 und dem ersten Funktionselement 112 auch mittels eines Hilfsstoffes geschehen, wie dies beispielhaft für die Varianten B und C der Figur 4 beschrieben wurde. Ebenso ist vorstellbar, dass das erste Funktionselement 112 zweilagig ausgebildet wird, wobei dann die Lage, die mit dem Montagevorsprung 114 in Verbindung kommt, ausreichend kompatibel sein muss, um ansonsten eine Hilfsstoff-freie Verbindung zu ermöglichen.

Bei der Variante F der Figur 4 wird ein Isoliersteg 120 verwendet, der mit einem ersten Funktionselement 123 zur Bildung des Isolierprofils 128 verbunden wird.

Zur Befestigung des ersten Funktionselements 123 an dem Isolierprofil 120 wird das Isolierprofil 120 mit einem Montagevorsprung 124 versehen, ähnlich wie es im Rahmen der Variante E beschrieben wurde. Das erste Funktionselement 123 wird dabei aus einem streifenförmigen Flächenmaterial 122 gebildet, das in Längsrichtung auf sich selbst zurückgefaltet wird und so zu einem beiderseitigen Anliegen der freien Enden an dem Montagevorsprung 124 führt.

In einer weiteren Abwandlung kann gemäß Variante G ein Isoliersteg 130 mit einem ersten Funktionselement 132 zu einem Isolierprofil 138 verbunden werden, wobei der Isoliersteg 130 wiederum im Wesentlichen mittig einen Montagevorsprung 134 aufweist.

Das erste Funktionselement 132 ist dreischichtig aufgebaut, wobei die Schichten a, b, c separat oder auch als dreilagige Einheit vorgefertigt verwendet werden können. Vorzugsweise wird das erste Funktionselement 132 so ausgestaltet, dass an dem dem Isoliersteg 130 zugewandten Rand die mittlere Lage b zurückspringt und so der Montagevorsprung 134 bei der Montage zwischen die Lagen a und c eingreifen kann.

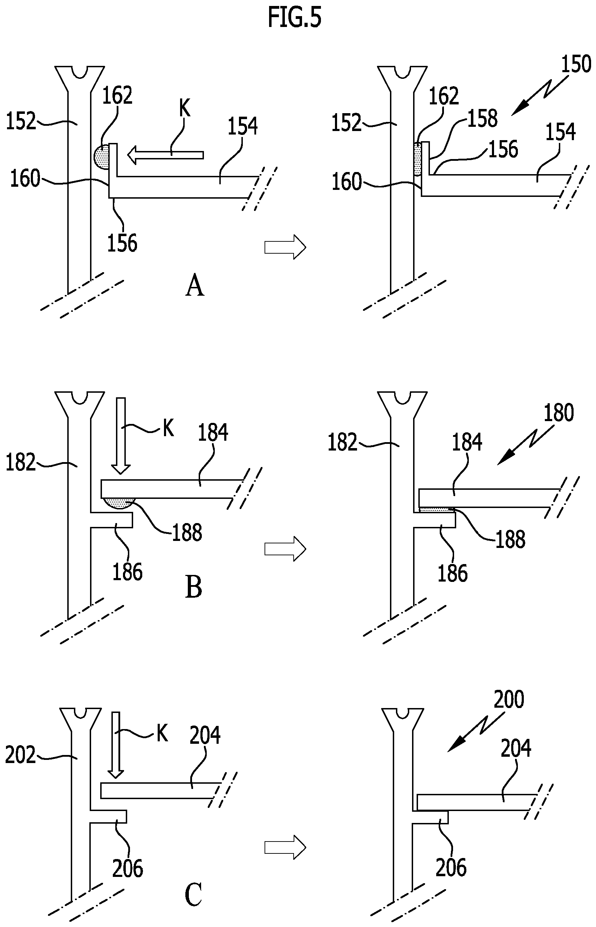

Anhand der Figur 5 sollen verschiedene bevorzugte Verfahren zur Herstellung der erfindungsgemäßen Isolierprofile erläutert werden.

Die Figur 5A zeigt ein Verfahren, bei dem ein Isolierprofil 150 aus einem Isoliersteg 152 und einem ersten planen Funktionselement 154 hergestellt wird, wobei das erste Funktionselement 154 an seinem mit dem Isoliersteg 152 zu verbindenden Rand 156 einen senkrecht abstehenden Vorsprung 158 aufweist. Der Vorsprung 158 ist in diesem Ausführungsbeispiel mit dem ersten Funktionselement 154 einstückig ausgebildet und auf einer dem ersten Funktionselement 154 abgewandten Fläche 160 mit einem Hilfsstoff 162 ausgerüstet, der so ausgewählt ist, dass er sowohl mit dem Werkstoff des Funktionselements 154 als auch mit dem Werkstoff, aus dem der Isoliersteg 152 gefertigt ist, eine stoffschlüssige Verbindung eingehen kann. Der Hilfsstoff 162 kann dabei kontinuierlich entlang der Längsrichtung des Vorsprungs 158, beispielsweise in Form einer sogenannten Raupe, aufgetragen sein oder in vorgegebenen Abständen aufgetragenen Raupenabschnitten oder aber punktuell in Form von Tropfen auf der Fläche 160 aufgetragen sein und dort stoffschlüssig haften.

Beim Verbinden des Isolierstegs 152 mit dem ersten Funktionselement 154 wird der Hilfsstoff 162 durch Energieeintrag zum Erweichen oder Schmelzen gebracht, so dass sich beim Anpressen des ersten Funktionselements 154 mit einer vorgegebenen Kraft K gegen eine Oberfläche des Isolierstegs 152 eine stoffschlüssige Verbindung des Hilfsstoffes 162 mit dem Werkstoff des Isolierstegs 152 bildet.

Eine Variante hiervon ist in Figur 5B gezeigt, bei der ein erfindungsgemäßes Isolierprofil 180 aus einem Isoliersteg 182 und einem ersten Funktionselement 184 gebildet wird. Bei dieser Variante weist der Isoliersteg 182 einen von einer seiner Oberflächen senkrecht abstehenden Vorsprung 186 auf, mit dem das erste Funktionselement 184 verbindbar ist.

Das erste Funktionselement 184 kann bei dieser Variante eine vollkommen plane Geometrie aufweisen. Wiederum wird die Verbindung zwischen dem Funktionselement 184 und dem Isoliersteg 182 mittels eines Hilfsstoffes 188 hergestellt, der, ähnlich wie im Zusammenhang mit der Figur 5A beschrieben, kontinuierlich, in Abschnitten oder punktuell auf einer Oberfläche des ersten Funktionselements 184 aufgetragen sein kann. In einer weiteren Alternative kann der Hilfsstoff 186 auch auf einer Oberfläche des Vorsprungs 184 aufgetragen sein (nicht gezeigt).

Beim Verbinden des Isolierstegs 182 mit dem ersten Funktionselement 154 wird der Hilfsstoff 188 wiederum durch Energieeintrag zum Erweichen oder Schmelzen gebracht, so dass sich beim Anpressen des ersten Funktionselements 154 mit einer vorgegebenen Kraft K gegen eine Oberfläche des Isolierstegs 182 eine stoffschlüssige Verbindung des Hilfsstoffes 188 mit dem Werkstoff des Isolierstegs 182 bildet.

Durch die Variation der Kraft K lässt sich in den Beispielen der Figuren 5A und 5B die erzeugte Kontaktfläche zwischen dem Hilfsstoff 162 bzw. 188 und den Oberflächen der jeweiligen Isolierstege 152, 182 und den Oberflächen der ersten Funktionselemente 154, 184 (bzw. den Funktionselement-seitigen oder Isoliersteg-seitigen Vorsprüngen) und damit zwischen den beiden Bauteilen so dimensionieren, dass eine ausreichende, vorgegebene Haltekraft resultiert.

Figur 5C zeigt in einer Abwandlung des Beispiels der Figur 5B ein erfindungsgemäßes Isolierprofil 200, welches aus einem Isoliersteg 202 und einem ersten Funktionselement 204 hergestellt wird. Analog dem Isolierprofil 180 der Figur 5B weist bei dem Isolierprofil 200 der Isoliersteg 202 einen senkrecht von einer Oberfläche abstehenden Vorsprung 206 auf, über den der Isoliersteg 202 mit dem ersten Funktionselement 204 verbindbar ist. Der Vorsprung 206 kann mit dem Isoliersteg 202 einstückig hergestellt sein.

Bei diesem Beispiel wird allerdings die stoffschlüssige Verbindung zwischen dem Isoliersteg 202 bzw. dessen Vorsprung 206 und dem ersten Funktionselement 204 Hilfsstoff-frei hergestellt. Hierzu müssen die Werkstoffe, aus dem der Isoliersteg 202 und das erste Funktionselement 204 hergestellt sind, miteinander kompatibel sein, so dass hier die Werkstoffauswahl gegenüber den Ausführungsbeispielen der Figuren 5A und 5B eingeschränkt ist.

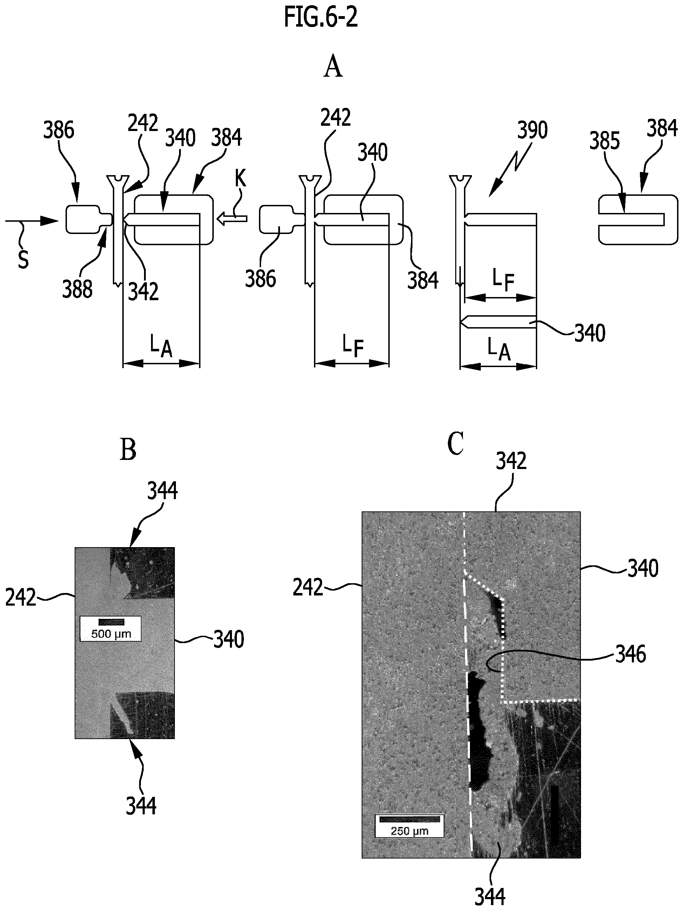

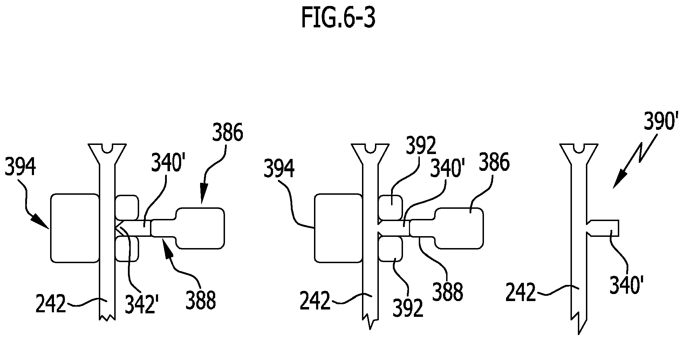

Anhand der Figur 6 soll im Einzelnen eines der bevorzugten Verfahren zur Herstellung der erfindungsgemäßen Isolierprofile beschrieben werden.

Figur 6-1 A zeigt ein erfindungsgemäßes Isolierprofil 220, welches Hilfsstoff-frei aus einem Isoliersteg 222 und einem ersten Funktionselement 224 in einem Ultraschallschweißverfahren hergestellt wird. Analog den Isolierprofilen 180 und 200 der Figuren 5B und 5C weist der Isoliersteg 222 des Isolierprofils 220 einen senkrecht von einer Oberfläche abstehenden Vorsprung 226 auf, über den der Isoliersteg 222 mit dem ersten Funktionselement 224 verbindbar ist. Der Vorsprung 226 kann wiederum mit dem Isoliersteg 222 einstückig hergestellt sein.

Zur stoffschlüssigen Verbindung des ersten Funktionselements 224 mit dem Vorsprung 226 des Isolierstegs 222 weist das Funktionselement eine im Querschnitt Dreieck-förmige Aufdickung 228 auf, die sich beim stoffschlüssigen Verbinden von Isoliersteg 222 und Funktionselement 224 unter Einwirkung der Kraft K zu einer ausreichend großflächigen Kontaktzone 230 verformen lässt. Der Energieeintrag erfolgt mittels einer sognannten Sonotrode, welche entgegensetzt zu dem ersten Funktionselement an den Isoliersteg (siehe Pfeil S) angelegt wird.

Neben der Kraft K ist die mechanische Festigkeit der Verbindung von Isoliersteg 222 und Funktionselement 224 über den Energieeintrag steuerbar, wobei hierbei sowohl die Intensität der Energieeinstrahlung als auch die Zeit variiert werden kann.

Dasselbe Prinzip findet Anwendung in der Variante des Beispiels der Figur 6-1 B, bei der ein erfindungsgemäßes Isolierprofil 240 aus einem Isoliersteg 242 und einem ersten Funktionselement 244 Hilfsstoff-frei hergestellt wird. Das erste Funktionselement 244 ist an seinem mit dem Isoliersteg 242 zu verbindenden Rand 246 mit einem senkrecht abstehenden Vorsprung 248 ausgerüstet. Der Vorsprung 248 ist in diesem Ausführungsbeispiel mit dem ersten Funktionselement 244 einstückig ausgebildet und weist auf einer dem ersten Funktionselement 244 abgewandten Fläche 250 eine im Querschnitt Dreieckförmige Aufdickung 252 auf.

Beim stoffschlüssigen Verbinden von Isoliersteg 242 und Funktionselement 244 mittels Ultraschallschweißen wird die Aufdickung 252 unter Einwirkung der Kraft K zu einer ausreichend großflächigen Kontaktzone 254 verformt.

Für dieses Verfahren eignet sich auch eine Vielzahl anders ausgestalteter erster Funktionselemente, die neben dem ersten Funktionselement 244 in Figur 6-1 C beispielhaft abgebildet sind.

Eine weitere Variante eines ersten Funktionselements ist in Form des ersten Funktionselements 260 in Figur 6-1 C abgebildet, wobei das erste Funktionselement 260 aus einem im Wesentlichen planen, streifenförmigen Körper gebildet ist, an dessen einem Rand, der mit einem Isoliersteg verbunden werden soll, ein nach oben abstehender, keilförmiger Fortsatz 262 angeformt ist, der in vergleichbarer Weise wie die im Querschnitt Dreieck-förmige Aufdickung 228 des ersten Funktionselements 224 eine ausreichende, verformbare Masse beinhaltet, um im Rahmen eines Ultraschallschweißschrittes eine gegebenenfalls großflächige Kontaktzone zu dem zu verbindenden Isoliersteg herzustellen.

Eine andere Variante ist in Form eines ersten Funktionselements 280 in Figur 6-1 C abgebildet, bei dem an dem im Wesentlichen planen, streifenförmigen Körper des Funktionselements 280 an dessen mit einem Isoliersteg zu verbindenden Rand ein Quersteg 282 angeformt ist, so dass ein insgesamt T-förmiges Querschnittsprofil gebildet wird.

An der von dem ersten Funktionselement 280 abgewandten Oberfläche des Querstegs 282 sind zwei im Querschnitt Dreieck-förmige Aufdickungen 284 und 286 angeformt, die im Rahmen eines Schritts zur Verbindung des ersten Funktionselements 280 mit einem Isoliersteg die Masse zur Verfügung stellen, die zur Ausbildung einer Kontaktzone verformt wird. Nach dieser Variante entstehen zwei Fügebereiche, somit ist offensichtlich dass die Fügezone nun stärker mechanisch belastet werden kann.

Bei einer weiteren Variante eines ersten Funktionselements 300 ist an dem im verbauten Zustand dem Isoliersteg zugewandten Rand des ersten Funktionselements 300 ein senkrecht abstehender Vorsprung 302 ausgebildet, dessen Masse wiederum für die Herstellung einer Kontaktzone zwischen dem ersten Funktionselement 300 und dem damit zu verbindenden Isoliersteg zur Verfügung steht.

Bei der Variante, die in Figur 6-1 C als erstes Funktionselement 320 abgebildet ist, ist ein in einem Winkel von ca. 60 bis 70° abstehender Vorsprung 322 vorgesehen, der ebenfalls eine ausreichende Masse beinhaltet, um unter Verformung eine Kontaktzone zwischen dem ersten Funktionselement 320 und einem damit zu verbindenden Isoliersteg herzustellen.

Eine weitere, sehr einfache Variante ist als erstes Funktionselement 340 in Figur 6-1 C gezeigt, wobei an dem Rand des ersten Funktionselements 340 direkt eine im Querschnitt Dreieck-förmige Aufdickung 342 ausgebildet ist. Die hier in etwas geringerem Maße zur Verfügung gestellte Masse zur Ausbildung einer Kontaktzone kann in vielen Fällen ausreichend sein, und gegebenenfalls kann zur Ausbildung einer Kontaktzone zusätzlich ein Teil des Materials, das von dem streifenförmigen ersten Funktionselement 340 zur Verfügung gestellt wird, zum Einsatz kommen.

Im Rahmen der Varianten der ersten Funktionselemente 360 und 380 soll lediglich beispielhaft gezeigt werden, dass auch deutlich komplexere Formen der ersten Funktionselemente möglich sind.

Das erste Funktionselement 360 der Figur 6-1 C weist ein im Querschnitt U-förmiges Profil auf mit zwei parallelen Wandabschnitten 362, 364 und einem diese beiden Wandabschnitte 362, 364 verbindenden Querwandelement 366.

Das Querwandelement 366 weist auf seiner den beiden Wandelementen 362, 364 abgewandten Oberfläche eine im Querschnitt Dreieck-förmige Aufdickung 368 auf, die im Wesentlichen das Material zur Verfügung stellt, das bei einer Verbindung des ersten Funktionselements 360 mit einem Isoliersteg zur Kontaktzone oder Fügezone verformt wird.

Eine weitere Variante ist in Figur 6-1 C als erstes Funktionselement 380 gezeigt, welches im Querschnitt eine an eine Teilkreisform angenäherte Kontur aufweist, welche an einer Außenoberfläche eine im Querschnitt Dreieck-förmige Aufdickung 382 aufweist, die bei einer stoffschlüssigen Verbindung des ersten Funktionselements 380 mit einem Isoliersteg zu einer Kontaktzone verformbar ist. In Figur 6-1 werden nur Dreieck-förmige Aufdickungen gezeigt, die als Energierichtungsgeber für das Schweißverfahren fungieren, es ist aber auch möglich andere Geometrien für diese Zweck zu verwenden. Dies sind neben abgeflachten Geometrien insbesondere auch sich verjüngende Strukturen, z.B. runde oder rundliche oder gestufte Querschnitte.

Ergänzend ist in der Figur 6-2 A der Verfahrensablauf zur stoffschlüssigen Verbindung des Isolierstegs 242 und dem ersten Funktionselement 340 dargestellt. Das Funktionselement 384 wird in einem Führungsspalt 385 einer Halterung 384, auch Amboss genannt, platziert, wobei der in der Abbildung linke Rand des ersten Funktionselements 340 die dreieckförmige Aufdickung 342 aufweist und aus der Halterung 384 herausragt.

Das erste Funktionselement 340 wird mit der Aufdickung 342 mittels der Halterung 384 mit einer vorgegebenen Kraft K gegen eine Oberfläche des Isolierstegs 242 gedrückt, während auf der gegenüberliegenden Oberfläche des Isolierstegs 242 ein Ultraschallerzeuger 386 mit einer so genannten Sonotrode 388 in Richtung des Pfeils S in Kontakt mit dem Isoliersteg 242 gebracht wird.

Die Einwirkung des Ultraschalls führt zu einem Aufschmelzen/Erweichen der Polymerwerkstoffe des Isolierstegs 242 sowie des ersten Funktionselements 340 im Bereich der Aufdickung 342. Die ursprüngliche Breite L_{A} des ersten Funktionselements 340 vermindert sich dabei auf die Breite L_{F} wobei die Differenz von L_{A} und L_{F} ungefähr der Höhe der Aufdickung 342 entspricht. Die Differenz kann beispielsweise ca. 50 µm bis ca. 5,0 mm betragen, bevorzugt beträgt die Differenz ca. 200 µm bis ca. 1,5 mm.

Danach kann der Ultraschallerzeuger 386 sowie die Halterung 384 entfernt werden. Die Fügepartner werden bevorzugt so lange fixiert bis die Schmelze erstarrt ist und keine unerwünschte Deformation oder Verschiebung der Fügepartner erfolgt. Die nötige Haltezeit kann dabei je nach Werkstoffkombination, Prozessparametern und Geometrie der Fügestelle von wenigen ms bis zu mehreren s dauern. Dieser Prozess wird bevorzugt in-line umgesetzt, dabei wird das Profil durch eine Anlagentechnik gefördert, welche das Fügeverfahren umsetzt.

Figur 6-2 B zeigt das Schliffbild eines Querschnitts der Verbindung des Isolierstegs 242 mit dem ersten Funktionselement 340, wobei beiderseits der Kontaktstelle des ersten Funktionselements 340 mit dem Isoliersteg 242 ein sogenannter Schmelzeaustrieb 344 zu beobachten ist. Der Schmelzaustrieb 344 lässt sich leicht mittels mechanischer Bearbeitung entfernen, falls dies unter optischen Gesichtspunkten erwünscht ist.

Figur 6-2 C zeigt dieselbe Situation wie Figur 6-2 B in größere Auflösung an einer Probe, bei der während dem stoffschlüssigen Verbinden mittels Ultraschall der Anpressdruck geringer eingestellt war wie bei der Fertigung der Probe, die in Figur 6-2 B gezeigt ist. Deshalb verbleibt zwischen dem Rand 346 des ersten Funktionselements 340 und der Oberfläche des Isolierstegs 242 ein gewisser Spalt, der einen Teil des Schmelzeaustriebs aufnehmen kann. Die Kontaktzone zwischen dem ersten Funktionselement 340 und dem Isoliersteg 242 ist dadurch kleinflächiger ausgebildet. In einer Reihe von Anwendungen kann dies in Kauf genommen werden.

In einer beispielhaften Ausführung nach Figur 6-2, die zu Ergebnissen ähnlich in Figur 6-2 B und C führt, wird eine gerade ausgeführte Fahne (340) mit einem Energierichtungsgeber (342) auf ein flaches Basisprofil (242) geschweißt. Der Energierichtungsgeber der Fahne wurde eingefräst und weist eine 60° Spitze auf, die ca. 0,8 mm weit aus einem als Stufe ausgeführten Anschlag ragt. Beide Fügepartner sind aus dem Werkstoff TECATHERM 66GF (PA66GF25) der Fa. Ensinger GmbH hergestellt.

Die Verschweißung wird diskontinuierlich mittels Ultraschall bei 20kHz durchgeführt, die Einkopplung der Ultraschallenergie erfolgt gemäß Figur 6-2 A durch das Basisprofil auf den Energierichtungsgeber und hat normiert auf die Länge der angeschweißten Fahne 8,2 J/mm betragen.

Während des Schweißvorgangs wurde die Anpresskraft bzw. Haltekraft K (Kraftrichtung: Fahne senkrecht auf Basisprofil) von 15,5 N/mm auf 24,4 N/mm erhöht, auch hier wird wieder eine Normierung der Kraft auf die Länge der Fahne verwendet.

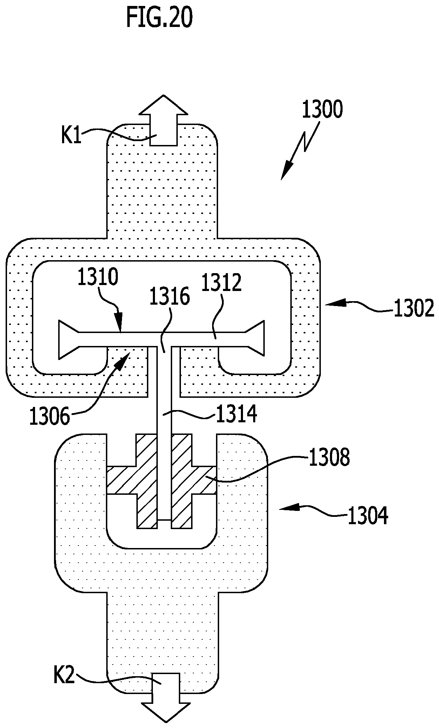

Nach dem Erstarren der Verschweißung wird die Qualität der Verschweißung untersucht. Im Zugversuch wurde eine normierte Festigkeit von 39,8 N/mm (gemäß dem in Figur 20 skizzierten Aufbau) ermittelt. Im Bruchbild (nicht gezeigt) erkennt man deutlich den Bereich der Verschmelzung, Schmelzeaustrieb und Reste der Konturen des Energierichtungsgebers wie es auch im Querschnitt der Figuren 6-2 B und C ersichtlich ist.

Figur 6-3 zeigt den Vorgang der stoffschlüssigen Verbindung von erstem Funktionselement 340 und dem Isoliersteg 242 mittels Ultraschall in einer alternativen Anordnung der Sonotrode 388. Bei diesem Verfahren wird eine Halterung mit zwei Führungselementen 392 zur Positionierung des ersten Funktionselements 340' verwendet und die Sonotrode 388 des Ultraschallerzeugers 386 wird auf dem der Aufdickung 342' gegenüberliegenden Rand des ersten Funktionselements 340' aufgesetzt. Auf der gegenüberliegenden Seite des ersten Funktionselements 242 ist ein Anschlag 394 oder Amboss angeordnet, der die vorgegebene Anpresskraft zwischen Isoliersteg 242 und erstem Funktionselement 340' aufbringt.

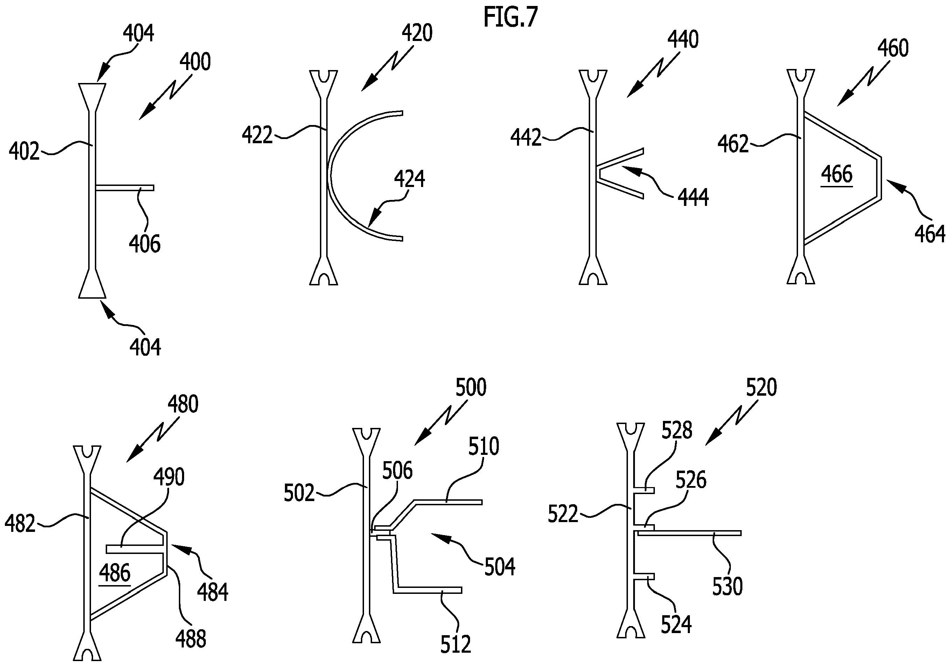

In der Figur 7 ist eine Vielzahl unterschiedlicher Ausführungsformen des erfindungsgemäßen Isolierprofils gezeigt, wobei zunächst auf das Isolierprofil 400 verwiesen werden darf, welches im Wesentlichen dem Isolierprofil der Figur 1A entspricht. Hier beinhaltet das Isolierprofil 400 einen Isoliersteg 402 mit an beiden, einander gegenüber liegenden Rändern ausgebildeten Einrollköpfen 404, die hier, anders als Figur 1A, ohne die Nuten 18 ausgebildet sind. Das Isolierprofil 400 weist neben dem Isoliersteg 402 ein in halber Höhe stoffschlüssig verbundenes erstes Funktionselement 406 auf, welches beispielsweise der mindestens partiellen Unterteilung eines von dem Isolierprofil 400 und zwei von diesem verbundenen Metallprofilen gebildeten Hohlraums und so der Zurückdrängung oder gar im Wesentlichen vollständigen Unterdrückung von Konvektionsströmen in diesem Hohlraum dienen kann (nicht gezeigt).

Als weiteres Ausführungsbeispiel ist in Figur 7 ein erfindungsgemäßes Isolierprofil 420 gezeigt, bei dem der Isolierprofilsteg etwa mittig, d.h. auf halber Höhe, mit einem halbkreisförmigen ersten Funktionselement 424 stoffschlüssig verbunden ist. Das erste Funktionselement 424 kann der Aufnahme von zusätzlichen Isolierkörpern wie z.B. runden Schaumprofilen (nicht gezeigt) dienen oder ähnlich wie das erste Funktionselement 406 der Unterteilung eines Hohlraums dienen, der von dem Isolierprofil 420 und damit verbundenen Metallprofilen gebildet wird (nicht gezeigt). Durch die gezeigte Ausführung ergibt sich u.a. der Vorteil, dass mittels einer Fügezone zwei abstehende Fahnen generiert werden.

Bei dem erfindungsgemäßen Isolierprofil 440 liegt eine Ausführungsform vor, bei der der Isoliersteg 442 auf halber Bauhöhe ein etwa V-förmig ausgebildetes erstes Funktionselement 444 trägt, das mit diesem stoffschlüssig verbunden ist. Die Funktion des ersten Funktionselements 444 ist ähnlich des ersten Funktionselements 406 oder des Funktionselements 424, also eine Unterteilung eines Hohlraums in kleinere Hohlräume zur Unterdrückung der Konvektion der von dem Isolierprofil 440 und damit verbundenen Metall-Kunststoff-Verbundprofilen gebildet wird (nicht gezeigt).

Bei der weiteren Ausführungsform eines Isolierprofils 460 der Figur 7 ist der Isoliersteg 462 mit einem ersten Funktionselement 464 stoffschlüssig verbunden, wobei das erste Funktionselement 464 zusammen mit dem Isoliersteg 462 eine im Querschnitt Trapez-förmige Hohlkammer 466 umschließt. Auch hier wird, beispielsweise bei Verwendung dieses Isolierprofils 460 in einem Metall-Kunststoff-Verbundprofil, der gebildete Hohlraum unterteilt und insbesondere das Volumen der Kammer 466 von dem restlichen Hohlraum abgetrennt, so dass erneut eine Wärmeübertragung mittels Konvektion vermindert oder zum großen Teil bis im Wesentlichen vollständig unterdrückt wird.

Ähnlich aufgebaut ist die Ausführungsform eines erfindungsgemäßen Isolierprofils 480 der Figur 7, bei dem ein Isoliersteg 482 mit einem wiederum an der Außenkontur im Querschnitt Trapez-förmig ausgebildeten ersten Funktionselement 484 stoffschlüssig verbunden ist.

Gegenüber der Ausführungsform des Isolierprofils 460 weist das Isolierprofil 480 innerhalb einer Hohlkammer 486 eine vom mittleren Teil 488 des ersten Funktionselements ins Innere der Kammer 486 weisende Fahne 490 auf, die zum Einen eine Konvektion innerhalb der Kammer 486 des Isolierprofils 480 unterdrückt, zum Anderen in besonderen Applikationen unter Umständen auch als Abstützelement dient, das einer Verformung des ersten Funktionselements 484 bei größeren Belastungen entgegenwirkt. Das erste Funktionselement 484 lässt sich aus einem Flächenmaterial formen, wobei dann ein mittlerer Bereich zur Bildung der Fahne 490 aufgedoppelt, d.h. auf sich selbst zurückgefaltet wird. Deshalb ergibt sich für die Fahne 490 wie in der Figur 7 gezeigt eine doppelt so große Wanddicke wie für die restlichen Bereiche des ersten Funktionselements 484.

Bei der Ausführungsform des Isolierprofils 500 der Figur 7 ist vorgesehen, dass an dem Isolierprofil auf halber Höhe ein Montagevorsprung 506 entweder einstückig mit dem Isoliersteg 502 ausgebildet oder nachträglich an diesen, vorzugsweise stoffschlüssig, angebracht ist, an welchen dann das erste Funktionselement 504 stoffschlüssig gebunden werden kann. Das erste Funktionselement 504 umfasst dabei zwei Teile, einen ersten Arm 510 und einen zweiten Arm 512, die beide abgewinkelt ausgebildet sind und in ihrer Form an die unterschiedlichsten Aufgaben, die diesen Armen 510, 512 zugeordnet werden können, in ihrem Querschnitt angepasst sind. Durch unterschiedliche Auslegung der Arme lässt sich auch hier der modulare Systemgedanke zur Produktgestaltung verfolgen, um Fahnen in der Position und Länge zu verändern. Da in diesem Beispiel der Montagevorsprung vom Basisprofil absteht, hat das Fügeverfahren nun keinen Einfluss mehr auf die mechanischen Eigenschaften des Basisprofils.

Bei dem Ausführungsbeispiel eines Isolierstegs 520 der Figur 7 ist schließlich der Isoliersteg 522 mit drei Vorsprüngen 524, 526, 528 einstückig ausgebildet, die bei Bedarf ein erstes Funktionselement 530 und gegebenenfalls weitere Funktionselemente halten.

Auch hier ist vorgesehen, dass das erste Funktionselement 530 mit dem hier mittleren Montagevorsprung 526 stoffschlüssig verbunden ist. Alle Montagevorsprünge (524, 526, 528) können nach Bedarf flexibel genutzt werden, um andere Profilgeometrien über den modularen Systemgedanken zu realisieren.

Auch wenn in der vorstehenden Beschreibung der erfindungsgemäßen Isolierprofile 420, 440, 460, 480, 500 und 520 nicht ausdrücklich erwähnt, können deren Isolierstege 422, 442, 462, 482, 502 und 522 einen im wesentlichen planaren Grundkörper oder einen Grundkörper mit komplexerer Geometrie aufweisen, an dem an einem oder - wie gezeigt - an beiden gegenüberliegenden Randabschnitten sogenannte Einrollköpfe ausgebildet sein, welche - wie ebenfalls gezeigt - eine Nut zur Aufnahme eines sogenannten Schmelzdrahtes aufnehmen können oder aber eine einfachere Struktur aufweisen, wie dies bei den Einrollköpfen 404 des Isolierstegs 402 des Isolierprofils 400 gezeigt ist.

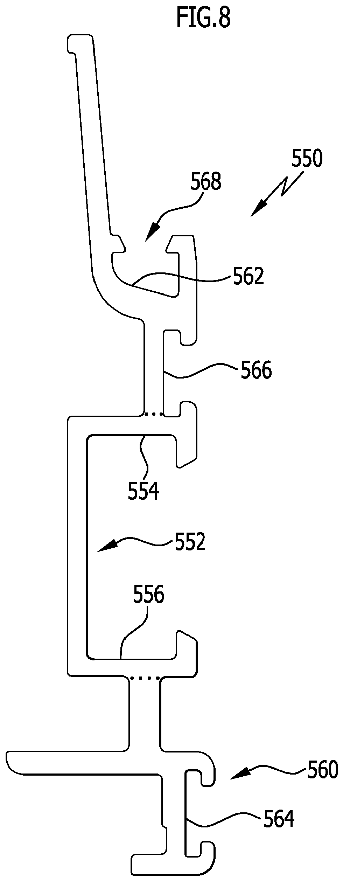

Figur 8 zeigt ein erfindungsgemäßes Isolierprofil 550, welches die Funktion einer sogenannten Schikane übernehmen kann. Solche Isolierprofile werden eingesetzt, um als Schwellen z.B. in Schiebesystemen (großformatige Fenster oder Türen) zu fungieren.

Das Isolierprofil 550 weist einen Isoliersteg 552 mit Randabschnitten 554, 556 auf, welche jeweils mit ersten Funktionselementen 568, 560 stoffschlüssig verbunden sind.

Die Funktionselemente 568, 560 können jeweils für sich zusätzliche Funktionalitäten für das Isolierprofil 550 bereitstellen, wie z.B. Aufnahmenuten 562, 564 für die formschlüssige Aufnahme von Dichtelementen (letztere nicht gezeigt), und/oder zusammen mit Teilen des Isolierstegs Funktionsbereiche bilden, wie z.B. die Aufnahmenut 566, die gegebenenfalls ebenfalls ein Dichtungselement im Formschluss aufnehmen kann.

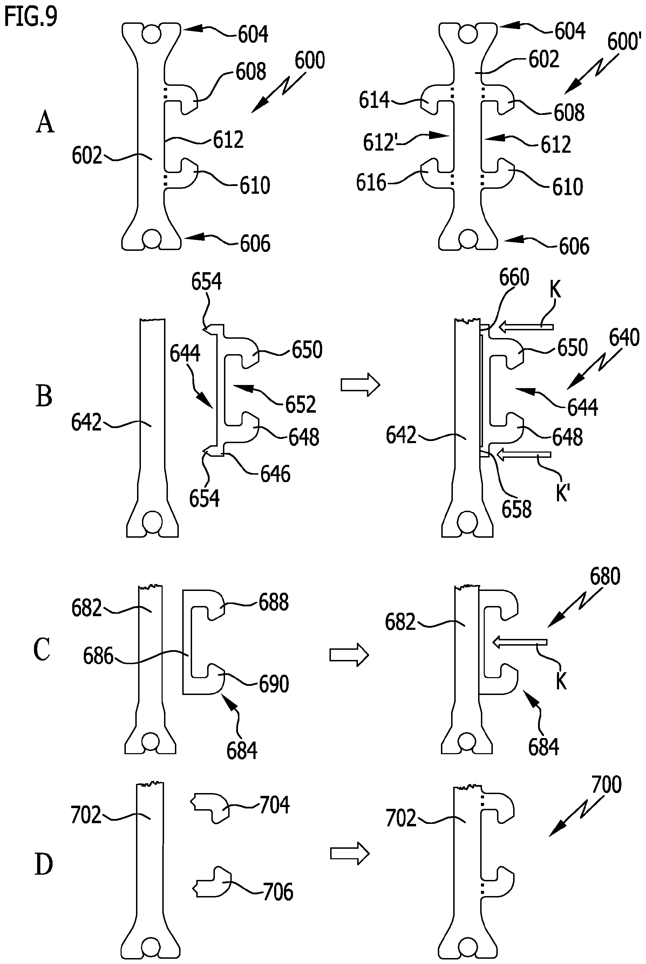

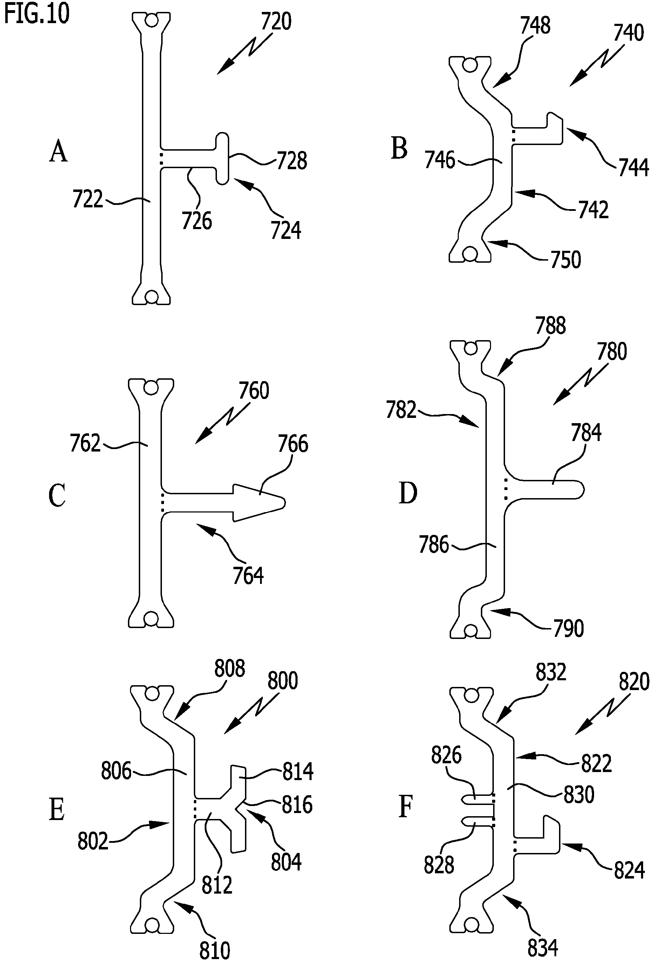

Als visuelles Hilfsmittel ist in den Figuren 8 (im Folgenden auch Figur 9 und Figur 10) eine gepunktete Trennlinie in einer potenziellen Fügezone zwischen Basisprofil und Funktionselement eingefügt.

Figur 9 zeigt mehrere Varianten A bis D eines erfindungsgemäßen Isolierprofils, welches an seinem Isoliersteg einseitig oder beidseitig mit ersten Funktionselementen ausgestattet wird, wobei die zu Anwendung kommenden Techniken zur stoffschlüssigen Verbindung verschieden sein können.

In dem Beispiel des Isolierprofils 600, das als Variante A gezeigt ist, können an dem im Wesentlichen als planarer Streifen ausgebildeten Isoliersteg 602 auf einer Oberfläche zwischen den Randabschnitten 604, 606 erste Funktionselemente 608, 610 mit einer stoffschlüssigen Verbindung aufgebracht werden.

Die ersten Funktionselemente 608, 610 weisen eine Hakenform auf, deren Vorsprünge im montierten Zustand gegeneinander gerichtet sind, so dass sich zwischen den ersten Funktionselementen 608, 610 eine Aufnahmenut 612 für ein formschlüssiges Aufnehmen von weiteren Funktionselementen (nicht gezeigt) bildet.

In Abwandlung des Isolierprofils 600 können, wie dies am Beispiel des Isolierprofils 600' gezeigt ist, auch auf beiden voneinander abgewandten Oberflächen des Isolierstegs 602 erste Funktionselemente 608, 610, 614, 616 stoffschlüssig montiert werden, so dass dann bei diesem Ausführungsbeispiel beidseits Aufnahmenuten 612, 612' zur Verfügung stehen.

Die ersten Funktionselemente 608, 610 bzw. 614, 616 lassen sich einzeln oder auch paarweise bereitstellen und stoffschlüssig mit dem Isoliersteg 602 verbinden, wie dies im Folgenden anhand der Varianten B bis D verdeutlicht wird.

Im Einzelnen zeigt die Variante B der Figur 9 am Beispiel eines erfindungsgemäßen Isolierprofils 640, das auf einem Isoliersteg 642 basiert, das Anbringen eines ersten Funktionselements 644, welches eine Montageplattform 646 und an dieser vom Isoliersteg 642 wegweisend zwei hakenförmige Vorsprünge 648, 650 aufweist, die vergleichbar mit den ersten Funktionselementen 608, 610 gegeneinander ausgerichtet sind und so zwischen sich eine Aufnahmenut 652 zur formschlüssigen Aufnahme eines weiteren Funktionselements (nicht gezeigt) bilden. An der Montageplattform sind auf der den hakenförmigen Vorsprüngen 648, 650 gegenüberliegend im Querschnitt sich verjüngend ausgebildete Aufdickungen 654, 656 angeformt, die bei dem stoffschlüssigen Verbinden des ersten Funktionselements 644 mit dem Isoliersteg 642 zu Kontaktzonen 658, 660 verformt werden. Je nach Arbeitsbedingungen, d.h. insbesondere Energieeintrag und Anpresskraft K und K' beim Ultraschallschweissen, wird ein partielles (wie gezeigt) oder auch vollflächiges Anliegen der Montageplattform 646 an der Oberfläche des Isolierstegs 642 erzielt.

Bei der Variante C der Figur 9 wird ein Isolierprofil 680 aus einem Isoliersteg 682 und einem ersten Funktionselement 684 mittels stoffschlüssiger Verbindung gebildet. Auch hier beinhaltet das erste Funktionselement 684 eine Montageplattform 686, an welcher gegeneinander gerichtete hakenförmige Vorsprünge 688, 690 gehalten sind. Anders als bei der Variante B weist die Montageplattform auf der den hakenförmigen Vorsprüngen gegenüberliegenden Oberfläche keine Aufdickungen auf. Die stoffschlüssige Verbindung von Isoliersteg 682 und erstem Funktionselement 684 wird hier vorzugsweise durch Kleben oder Schweißen vorgenommen. Dabei liegt bevorzugt eine Anpresskraft K zwischen den hakenförmigen Vorsprüngen an. Im Falle des Schweißens, wobei hier Laser- oder Ultraschallschweißen bevorzugt sind, kann die Energie ebenfalls zwischen den hakenförmigen Vorsprüngen direkt auf die Montageplattform eingebracht werden, wodurch dann eine Verschweißung etwa auf halber Höhe der Montageplattform 686 zum Isoliersteg 682 hin realisiert wird.

Schließlich zeigt die Variante D der Figur 9 die Herstellung eines erfindungsgemäßen Isolierprofils 700 aus einem Isoliersteg 702 und zwei hakenförmigen ersten Funktionselementen 704, 706, welche wie bei der oben beschriebenen Variante A der Figur 9 separat auf derselben Oberfläche des Isolierstegs 702 stoffschlüssig aufgebracht werden. Hierzu sind die ersten Funktionselemente 704, 706 an ihren dem Isoliersteg zugewandten Flächen mit im Querschnitt Dreieck-förmigen Aufdickungen 708, 710 ausgebildet, welche beim Ultraschallschweissen zu Kontaktzonen verformt werden.

Figur 10 zeigt eine weitere Anzahl von Varianten A bis F von erfindungsgemäßen Isolierprofilen, bei denen der Isoliersteg unterschiedlich geformt und die ersten Funktionselemente mit variierender Funktionalität gezeigt sind.

Bei der Variante A der Figur 10 weist ein erfindungsgemäßes Isolierprofil 720 einen im Wesentlichen planen streifenförmigen Isoliersteg 722 auf, an welchen auf etwa halber Bauhöhe ein erstes Funktionselement 724 mittels einer stoffschlüssigen Verbindung montiert ist. Das erste Funktionselement weist im Querschnitt ein T-Form auf, wobei das Segment 726 mit seinem freien Ende stoffschlüssig mit dem Isoliersteg 722 verbunden ist und an seinem anderen Ende das Quersegment 728 trägt. Typischerweise werden das Segment 726 und das Quersegment 728 einstückig gefertigt, beispielsweise extrudiert.

Die Variante B der Figur 10 zeigt ein erfindungsgemäßes Isolierprofil 740, welches auf einem Isoliersteg 742 und einem ersten Funktionselement 744 basiert. Der Isoliersteg 742 weist ein planes Mittelteil 746 und beidseitig daran anschließend zur selben Seite hin abgekröpfte Randabschnitte 748, 750 auf, welche jeweils mit einem Einrollkopf ausgestattet sind.

Bei der Variante C der Figur 10 ist ein erfindungsgemäßes Isolierprofil 760 gezeigt, welches sich aus einem planen Isoliersteg 762 und einem Pfeil-förmig gestalteten ersten Funktionselement 764 zusammensetzt. Die Pfeilspitze 766 kann als Teil einer Rastverbindung mit einem weiteren Funktionselement (nicht gezeigt) verwendet werden, mit dem die Funktionalität des Isolierprofils 760 weiter variierbar ist.

Als Variante D ist in Figur 10 ein erfindungsgemäßes Isolierprofil 780 abgebildet, welches einen Isoliersteg 782 mit einem planen und senkrecht von diesem abstehenden ersten Funktionselement 784 umfasst. Der Isoliersteg 782 selbst ist mit einem planen Mittelteil 786 ausgebildet, an welches sich beidseits zur selben Seite hin abgekröpfte Randabschnitte 788, 790 anschließen. Die Randabschnitte 788, 790 sind wie in den anderen Varianten der Figur 10 auch mit Einrollköpfen ausgebildet.

Die Variante E der Figur 10 betrifft ein erfindungsgemäßes Isolierprofil 800 mit einem Isoliersteg 802 und einem daran stoffschlüssig angebundenen ersten Funktionselement 804. Der Isoliersteg 800 ist mit einem planen Mittelteil 806 ausgebildet, an welches sich beidseits zur selben Seite hin abgekröpfte Randabschnitte 808, 810 anschließen. Das erste Funktionselement 804 weist eine T-Form auf, bei der das Segment 812 mit seinem freien Ende stoffschlüssig mit dem Isoliersteg 802 verbunden ist. Das Quersegment 814 des ersten Funktionselements 804 ist mittig mit einer im Querschnitt Dreieck-förmigen Nut 816 versehen. Im verbauten Zustand des Isolierprofils 800 kann das Funktionselement dann z.B. passend ausgelegte elastische Dichtungsprofile aufnehmen und durch die T-Funktion mit Nut sicher fixieren und in Position halten.

Als Variante F ist schließlich in Figur 10 ein erfindungsgemäßes Isolierprofil 820 dargestellt, welches neben einem Isoliersteg 822 und einem ersten hakenförmigen Funktionselement 824 zwei weitere Funktionselemente 826, 828 aufweist. Der Isoliersteg 822 ist mit zwei zur selben Seite hin von einem planen Mittelteil 830 abgekröpften Randabschnitten 832, 834 ausgebildet. Die beiden weiteren Funktionselemente 826, 828 sind aus einem planen streifenförmigen Material hergestellt und jeweils mit einem ihrer Ränder stoffschlüssig mit dem Isoliersteg 822 verbunden. Die beiden weiteren Funktionselemente 826, 828 bilden eine Rinne, die beispielsweise der Aufnahme eines freien Randes eines ersten Funktionselements eines weiteren erfindungsgemäßen Isolierprofils dienen kann (nicht gezeigt). Beispielhaft kann hierzu auf das erfindungsgemäße Isolierprofil 20 und dessen erstes Funktionselement 30 verwiesen werden.

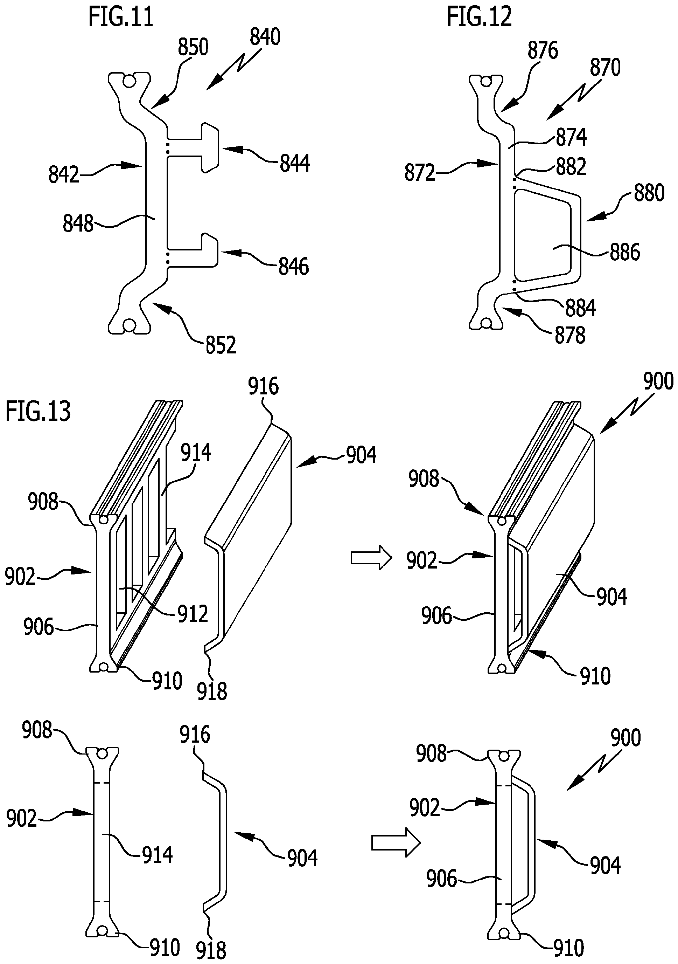

Eine weitere Ausführungsform eines erfindungsgemäßen Isolierprofils 840 ist in Figur 11 gezeigt. Das Isolierprofil 840 umfasst einen Isoliersteg 842 und zwei damit stoffschlüssig verbundene erste Funktionselemente 844, 846.

Der Isoliersteg 842 umfasst ein planes Mittelteil 848 und beidseits daran anschließende Randabschnitte 850, 852, welche gegenüber dem Mittelteil 848 zu einer Seite des Isolierstegs 842 hin abgekröpft sind. Auf der gegenüberliegenden Seite sind mit dem Isoliersteg 842 die ersten Funktionselemente 844, 846 stoffschlüssig verbunden. Das erste Funktionselement 844 ist T-förmig ausgebildet, das erste Funktionselement 846 hakenförmig. Die beiden ersten Funktionselemente 844, 846 bilden zusammen eine Aufnahmenut 854, in die beispielsweise ein Dichtelement (nicht gezeigt) formschlüssig eingesetzt werden kann.

Figur 12 zeigt eine weitere Ausführungsform eines erfindungsgemäßen Isolierprofils 870. Das Isolierprofil 870 weist einen Isoliersteg 872 mit einem planen Mittelteil 874 und daran anschließenden Randbereichen 876, 878 auf, welche zu einer Seite des Isolierstegs 872 hin abgekröpft sind. Auf der gegenüberliegenden Seite weist der Isoliersteg 872 ein erstes U-förmig gestaltetes Funktionselement 880 auf, welches mit den beiden freien Enden 882, 884 stoffschlüssig mit dem Mittelteil 874 des Isolierstegs 872 verbunden ist und dabei eine gegenüber der Umgebung abgeschlossene Hohlkammer 886 bildet.

Figur 13 zeigt in einer dreidimensionalen und einer Schnittansicht eine weitere Ausführungsform eines erfindungsgemäßen Isolierprofils 900. Das Isolierprofil 900 setzt sich aus einem Isoliersteg 902 und einem ersten Funktionselement 904 zusammen.

Der Isoliersteg 902 umfasst einen planen, streifenförmigen Grundkörper 906, an den sich an beiden gegenüberliegenden Rändern Randabschnitte 908, 910 anschließen. Der Grundkörper 906 weist in regelmäßigen Abständen entlang seiner Längsrichtung Durchgangsöffnungen 912 auf, die sich quer zur Längsrichtung des Isolierprofils 900 über im Wesentlichen die gesamte Breite des Grundkörpers 906 des Isolierstegs 902 erstrecken und voneinander über Stege 914 getrennt sind. Dadurch kann der Wärmedurchgang durch das Isolierprofil 900 deutlich vermindert werden.

Das erste Funktionselement 904 ist im Querschnitt wannenförmig ausgebildet, wobei einer oder beide der freien Ränder 916, 918 stoffschlüssig mit dem Isoliersteg 902 verbunden wird/werden. Das wannenförmige erste Funktionselement 904 des Isolierprofils 900 erstreckt sich in dessen Querrichtung über die gesamte Breite des Grundkörpers 906 und ist mit seinen freien Rändern 916, 918 mit den Randabschnitten 908 bzw. 910 stoffschlüssig verbunden.

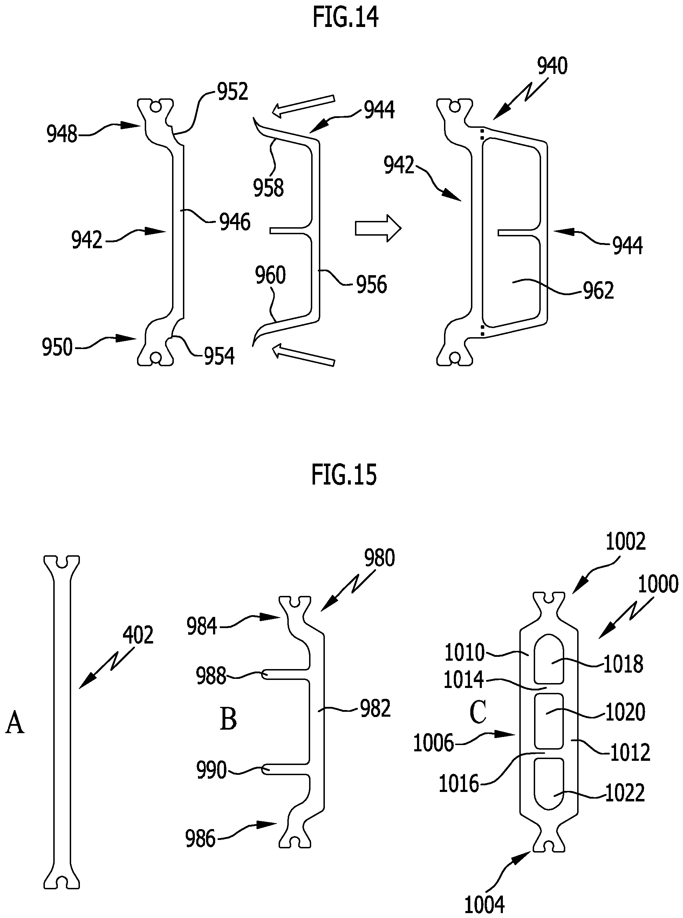

Figur 14 zeigt ein weiteres Beispiel einer erfindungsgemäßen Ausführungsform eines Isolierprofils 940 und den Weg seiner Herstellung.

Das Isolierprofil 940 wird aus einem Isoliersteg 942 und einem ersten Funktionselement 944 hergestellt, wobei der Isoliersteg 942 ein planes Mittelteil 946 und daran angeformte Randabschnitte 948, 950 umfasst, welche zu einer Seite des Mittelteils 946 hin abgekröpft ausgebildet sind. Auf der gegenüberliegenden Seite sind in den Randabschnitten 948, 950 Einbuchtungen 952, 954 vorgesehen.

Das erste Funktionselement 944 weist im Querschnitt im Wesentlichen eine U-Form mit einer Querwand 956 und zwei Seitenwänden 958, 960. Die freien Enden der Seitenwände 958, 960 sind verjüngt und in ihrer Form den Einbuchtungen 952 bzw. 954 des Isolierstegs 942 angepasst. Bei einem stoffschlüssigen Verbinden der freien Enden der Seitenwände 958, 960 des ersten Funktionselement 944 und dem Isoliersteg 942 kann so ein weitgehend stufenloser Übergang an der Außenkontur des Isolierprofils 940 erzielt werden.

Mit der stoffschlüssigen Verbindung des Isolierstegs 942 mit dem ersten Funktionselement 944 wird eine Hohlkammer 962 gebildet. Diese kann bei Bedarf durch einen stegförmigen, von der Querwand 956 im Wesentlichen parallel zu den Seitenwänden 958, 960 abstehenden Vorsprung 964 unterteilt werden, um gegebenenfalls zu erwartende Konvektionsströmungen in der Hohlkammer 962 zu unterdrücken.

Figur 15 zeigt im Vergleich drei Beispiele für Isolierstege, die der Fertigung von erfindungsgemäßen Isolierprofilen zugrunde gelegt werden können.

Die Variante A in Figur 15 entspricht dem Isoliersteg 402, wie er bei der Fertigung des Isolierprofils 400 (siehe Figur 7) zum Einsatz kommt.

Die Variante B der Figur 15 zeigt, dass erfindungsgemäß auch wesentlich komplexer strukturierte Isolierstege zum Einsatz kommen können. Der Isoliersteg 980 weist ein streifenförmiges planes Mittelteil 982 auf, an welches sich an beiden gegenüberliegenden Rändern Randabschnitte 984, 986 anschließen, welche gegenüber dem Mittelteil 982 abgekröpft ausgebildet sind.

Das Mittelteil 982 weist auf Seiten der abgekröpften Randabschnitte 984, 986 zwei senkrecht abstehende Vorsprünge 988, 990 auf, die in diesem Beispiel zusammen mit dem Mittelteil 982 und den Randabschnitten 984, 986 in einem Extrusionsschritt einstückig hergestellt, insbesondere extrudiert werden.

Bei der Variante C der Figur 15 ist ein Isoliersteg 1000 gezeigt, der als Hohlprofil ausgebildet ist. Das Hohlprofil kann eine oder mehrere Hohlkammern umfassen, im vorliegenden Beispiel sind es drei. Der Isoliersteg 1000 weist an zwei gegenüberliegenden Enden Randabschnitte 1002, 1004 auf, die als Einrollköpfe ausgestaltet sind. Der Grundkörper 1006 des Isolierstegs 1000 wird aus zwei im Wesentlichen parallel verlaufenden Wänden 1010, 1012 gebildet, welche einen Hohlraum umschließen, der über zwei Querstege 1014, 1016 in drei Hohlkammern 1018, 1020, 1022 unterteilt ist. Auch dieser relativ komplex aufgebaute Isoliersteg 1000 kann einstückig ausgeformt, insbesondere extrudiert werden.

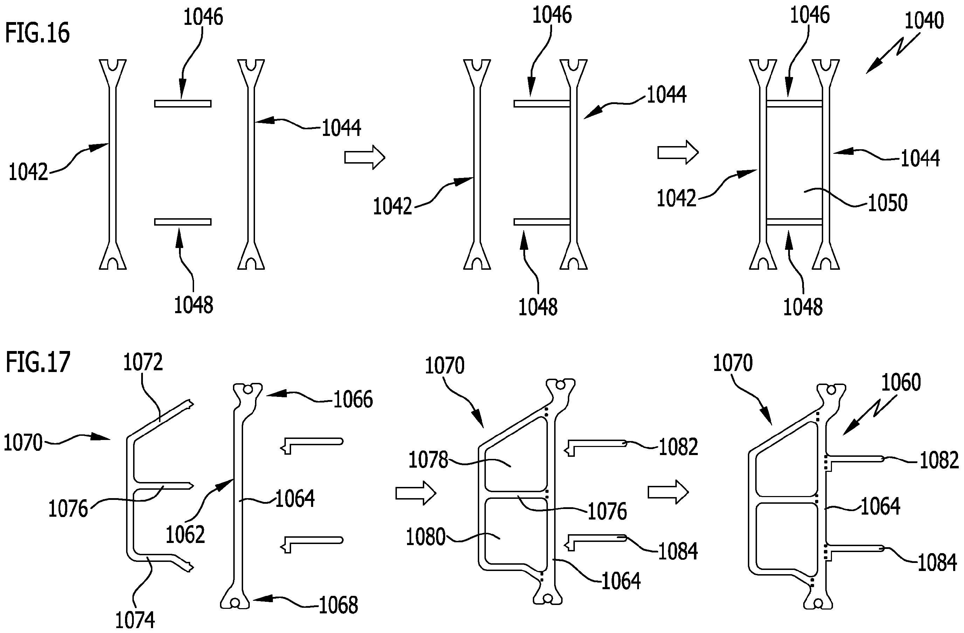

Figur 16 zeigt ein weiteres Ausführungsbeispiel für ein erfindungsgemäßes Isolierprofil 1040, welches als Hohlkammerprofil konzipiert ist.

Das Isolierprofil setzt sich aus zwei planen Isolierstegen 1042, 1044 sowie zwei planen ersten Funktionselementen 1046, 1048 zusammen. Die stoffschlüssige Verbindung der Isolierstege 1042, 1044 mit den ersten Funktionselementen 1046, 1048 kann unterschiedlich erfolgen.

Die Figur 16 zeigt eine der möglichen Varianten, gemäß der die beiden ersten Funktionselemente 1046, 1048 parallel zueinander ausgerichtet zunächst mit einem der beiden Isolierstege, nämlich dem Isoliersteg 1044, stoffschlüssig verbunden werden und in einem nachgelagerten Schritt mit dem weiteren Isoliersteg 1042, wobei dann eine Hohlkammer 1050 gebildet wird. Bei dem ersten Schritt kann sowohl ein gleichzeitiges stoffschlüssiges Verbinden der ersten Funktionselemente 1046, 1048 mit dem einen Isoliersteg 1044 erfolgen, aber auch ein aufeinanderfolgendes Verbinden der beiden Funktionselemente 1046, 1048 kann wirtschaftlich sinnvoll sein.

Alternativ ist ferner vorstellbar, dass das Isolierprofil 1040 derart hergestellt wird, dass in einem ersten Schritt jeder der Isolierstege 1042, 1044 mit jeweils einem der ersten Funktionselemente 1046, 1048 stoffschlüssig verbunden wird und danach eine stoffschlüssige Verbindung dieser Isoliersteg/Funktionselement-Verbunde miteinander zum Isolierprofil 1040 erfolgt.

Figur 17 zeigt ein komplexes Ausführungsbeispiel eines erfindungsgemäßen Isolierprofils 1060 sowie dessen Herstellung. Das Isolierprofil 1060 umfasst einen Isoliersteg 1062 mit einem im Wesentlichen planen Profil- oder Grundkörper 1064, an dessen beiden Rändern Randabschnitte 1066, 1068 angeformt sind, welche jeweils einen Einrollkopf aufweisen. Einer der Randabschnitte 1066 ist gegenüber dem Grundkörper 1064 abgekröpft, während sich der andere Randabschnitt 1068 im Wesentlichen entlang einer Symmetrieachse des Grundkörpers 1064 erstreckt.

Als erstes Funktionselement 1070 kommt ein im Querschnitt W-förmig gestaltetes Profil zum Einsatz, welches sowohl mit seinen Seitenwänden 1072, 1074 als auch einer mittleren Wand 1076 stoffschlüssig mit dem Grundköper 1070 bzw. mit den Randabschnitten 1066, 1068 verbunden wird. Dadurch werden zwei voneinander vollständig getrennte Hohlkammern 1078, 1080 gebildet.

In einem weiteren Fertigungsschritt werden an den Isoliersteg 1064 bzw. dessen Grundkörper 1064 zwei weitere, im Querschnitt L-förmig ausgebildete Funktionselemente 1082, 1084 stoffschlüssig angeschlossen.

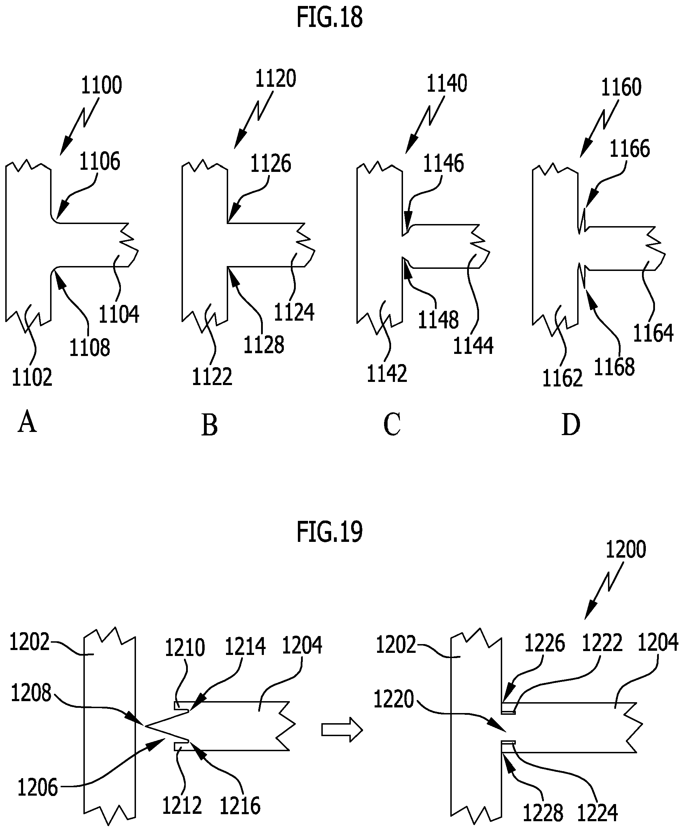

Figur 18A zeigt einen Ausschnitt eines herkömmlich mittels klassischer Extrusion einstückig hergestellten Isolierprofils 1100 im Querschnitt. Das Isolierprofil 1100 weist einen Isoliersteg 1102 und ein daran angeformtes Funktionselement in Form einer senkrechtabstehenden Fahne 1104 auf. Typisch für im Extrusionsprozess einstückig hergestellte Isolierprofile 1100 ist der Übergangsbereich vom Isoliersteg 1102 zum Funktionselement 1104 mit Radien 1106, 1108 von ca. 0,1 mm oder mehr.

Der Übergangsbereich eines erfindungsgemäßen Isolierprofils 1120 gemäß Figur 18B ist dagegen bei einer ideal ausgebildeten Verbindungszone zwischen dem Isoliersteg 1122 und dem ersten Funktionselement 1124 als klare Stoßkante 1126, 1128 ausgebildet.

In weniger ideal, aber immer noch vollfunktionsfähigen Übergangsbereichen wird eine von der in Figur 18B gezeigten Stoßkante abweichende Struktur erhalten, wie in den Beispielen der Figuren 18C und 18D gezeigt ist. Eine visuelle oder mikroskopische Bewertung dieser Struktur erlaubt eine einfache Zuordnung dahingehend, ob es sich um erfindungsgemäße Isolierprofile handelt. Bei solch einer Fragestellung kann z.B. ein Schliffbild eines Isolierprofil-Querschnitts (nach Einbetten in einen Trägermedium wie Epoxidharz etc.) angefertigt werden, um Rückschlüsse auf das Fügeverfahren, Materialkombinationen oder die Verwendung von Hilfsstoffen zu ziehen. Erfindungsgemäße Profile weisen Strukturen auf, die sich aus einem stoffschlüssigen Fügeprozess ergeben und die sich nicht in einem einstufigen Herstellungsprozess (z.B. Extrusion) erzeugen lassen. Einige diese Strukturen sind in Figur 18 C oder Figur 18 D oder Figur 19 schematisch dargestellt. Zu nennen sind vor allem feine Haarspalte (1146, 1148) oder Austrieb von Hilfsstoffen oder Austrieb von Schmelzen (1166, 1168), was einen Hinweis auf ein erfindungsgemäßes Fügeverfahren geben kann.

In Figur 18C weist ein erfindungsgemäßes Isolierprofil 1140 einen Übergangsbereich zwischen dem Isoliersteg 1142 und dem damit stoffschlüssig verbundenen ersten Funktionselement 1144 auf, der beidseitig des ersten Funktionselements 1144 eine Kerbe 1146, 1148 oder auch Haarspalt beinhaltet. Wird bei dem Verfahren zum stoffschlüssigen Verbinden von Isoliersteg 1142 und erstem Funktionselement 1144 ein größerer Energieeintrag und/oder ein höherer Druck (Kraft K) aufgewendet, können die Kerben 1146, 1148 deutlich verringert werden und im Idealfall Stoßkanten erzielt werden wie sie in Figur 18B gezeigt sind. Ebenfalls kann sich auch ein Haarspalt ausbilden, wenn mit Hilfsstoffen gearbeitet wird.

In Figur 18D weist ein erfindungsgemäßes Isolierprofil 1160 einen Übergangsbereich zwischen dem Isoliersteg 1162 und dem ersten Funktionselement 1164 auf, der bei deren stoffschlüssigen Verbindung einen Material- oder Schmelzeaustrieb 1166, 1168 beinhaltet, wie dies ähnlich schon im Rahmen der Abbildungen B und C der Figur 6-2 gezeigt und diskutiert wurde.

In Figur 19 ist ein erfindungsgemäßes Isolierprofil 1200 gezeigt, bei welchem ein Isoliersteg 1202 mit einem ersten Funktionselement 1204 stoffschlüssig verbunden wird bzw. ist. Der mit dem Isoliersteg zu verbindende Rand 1206 des ersten Funktionselements 1204 ist mit einer optimierten Struktur ausgebildet, bei der die im Querschnitt Dreieck-förmige Aufdickung 1208 zu beiden Seiten von parallel verlaufenden Vorsprüngen 1210, 1212 eingefasst wird, derart, dass an der Basis der Aufdickung 1208 zwischen derselben und den Vorsprüngen 1210, 1212 eine Kerbe 1214, 1216 oder ein Spalt verbleibt, die bei einer Verformung des Polymerwerkstoffs der Aufdickung unter Bildung einer Kontaktzone 1220 zwischen dem Isoliersteg 1202 und dem ersten Funktionselement 1204 Schmelzeaustrieb aufnehmen kann. Die Restvolumina 1222, 1224 der Kerben 1214, 1216 sind lediglich im Querschnitt zu erkennen, so dass hier mit vertretbarem Aufwand eine optisch glatte Stoßkante 1226, 1228 - wie schematisch in Figur 18B gezeigt - erzielbar ist. Dieses Konzept lässt sich natürlich auf die diversen o.g. Fügeverfahren übertragen. Die Herstellung der konturierten Struktur des Randes 1206 mit einer Aufdickung 1208 und ggf. mit Kerben 1214, 1216 kann z.B. über einen Fräsprozess erfolgen, falls andere Verfahren (z.B. Extrusion) nicht sinnvoll oder zielführend sind.

Im Rahmen der Beschreibung verschiedener Ausführungsformen der erfindungsgemäßen Isolierprofile wurde schon darauf hingewiesen, dass die Kontaktzone, die bei der stoffschlüssigen Verbindung von Isoliersteg und erstem Funktionselement ausgebildet wird, je nach Anwendung bzw. Einsatzzweck der erfindungsgemäßen Isolierprofile unterschiedlich groß ausgebildet werden kann. Wichtig ist dabei allerdings, dass eine ausreichende mechanische Festigkeit der Verbindung zwischen dem Isoliersteg und dem ersten Funktionselement erzielt wird, so dass das erfindungsgemäße Isolierprofil sicher gehandhabt und verarbeitet werden kann.

Zur Charakterisierung der Festigkeit der Verbindung und deren damit einhergehende mechanische Belastbarkeit eignet sich ein Test, der im Rahmen der Figur 20 näher beschrieben werden soll.

Figur 20 zeigt eine Prüfvorrichtung 1300, die in einer herkömmlichen Universalprüfmaschine zur Bestimmung von Zugbelastungsgrenzen von Bauteilen verwendet werden kann.

Die exemplarische Prüfvorrichtung 1300 ist ausgelegt für einfache Profile mit senkrecht abstehender Fahne, in diesem Fall liegt bei einer Prüfung eine Zugkraft senkrecht zum Profilkörper an der Fahne an. Es ist aber auch möglich Prüfvorrichtungen für andere Profilgeometrien auszulegen und ggf. auch andere Wirkrichtungen der Krafteinleitungen zu berücksichtigen sofern dies zweckmäßig ist um Aussagen über die Fügezone und Qualität der Verbindung der Fügepartner zu erhalten.

Die Prüfvorrichtung 1300 umfasst eine obere Prüfkörperaufnahme 1302 sowie eine untere Prüfkörperaufnahme 1304. In der oberen Prüfkörperaufnahme 1302 ist eine zweigeteilte Prüfkörperauflage 1306 ausgebildet, auf der ein erfindungsgemäßes Isolierprofil 1310 (z.B. in Form eines sorgfältig abgelängten Isolierprofils als Prüfkörper mit einer Länge von 20 mm bis 50 mm) mit seinem Isoliersteg 1312 aufgelegt werden kann, wobei dessen erstes Funktionselement 1314 durch einen Spalt zwischen den beiden Teilen der Prüfkörperauflage 1306 durchtreten kann.

Die untere Prüfkörperaufnahme 1304 umfasst ein Paar Klemmbacken 1308, in die sich ein Abschnitt des ersten Funktionselements 1314 einspannen lässt.

Bei der Zugprüfung wird in Richtung der Pfeile K1 und K2 eine Kraft auf die Füge- oder Kontaktzone 1316 des Isolierprofils 1310 ausgeübt, die kontinuierlich gesteigert wird bis ein Abriss des ersten Funktionselements von dem Isoliersteg 1314 erfolgt. Die Parameter der Zugprüfung können angepasst werden um den Werkstoffen entsprechend aussagekräftige Ergebnisse zu erhalten, üblicherweise wird diese Zugprüfung mit einer Geschwindigkeit von 1 mm/min, 5mm/min oder 10 mm/min durchgeführt. Die ermittelte Kraft bis zum Versagen des Prüfkörpers wird dann auf die Länge des Probenkörpers des Isolierprofils normiert. Es muss dabei sichergestellt werden, dass bei der Messung die untersuchende Fügezone vollflächig und in einer sinnvollen Richtung z.B. mit Normalkraft belastet wird. Erfindungsgemäße Isolierprofile weisen dann Festigkeiten auf von ca. 2 N/mm oder mehr, bevorzugt ca. 5 N/mm oder mehr, besonders bevorzugt ca. 10 N/mm oder mehr.

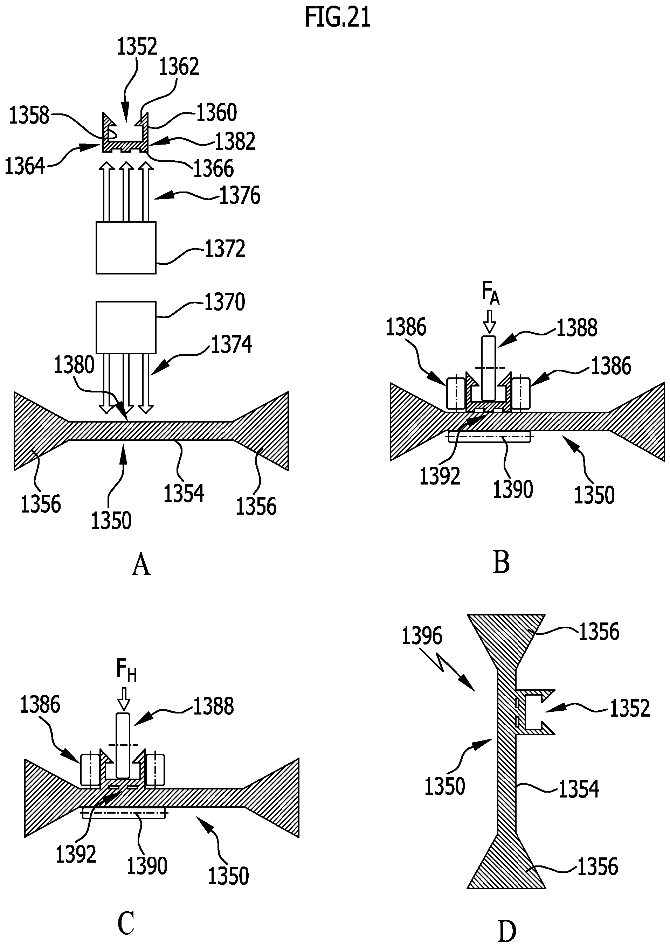

Die Figur 21 zeigt schematisch einen Verfahrensablauf zur stoffschlüssigen Verbindung eines Isolierstegs 1350 mit einem ersten Funktionselement 1352 in einer Produktionsanlage (nur in Teilen dargestellt). Der Isoliersteg 1350 weist einen planen Profilkörper 1354 und beidseits daran angeformte Randabschnitte in Form von Einrollvorsprüngen 1356 auf. Das Funktionselement 1352 weist einen U-förmigen Querschnitt mit einer Aufnahmenut 1358 auf, welche beidseits von je einem Vorsprung 1360 begrenzt wird. Die Vorsprünge 1360 weisen an ihren freien Enden jeweils einen zum Inneren der Nut weisenden Rastvorsprung 1362 auf. Das Funktionselement 1352 weist an seiner unteren Bodenfläche 1364 drei parallel zueinander, in Längsrichtung des Funktionselements 1352 verlaufende Aufdickungen 1366 auf.

Bei dem in Figur 21 gezeigten Verfahren handelt es sich um eine Variante eines kontinuierlichen in-line Prozesses, die Darstellung in Figur 21 erfolgt mit Blick in Vorschubrichtung. Nicht gezeigt ist die Fördertechnik, welche den Isoliersteg 1350 sowie das Funktionselement 1352 präzise führt und fördert oder sonstige übliche, dem Fachmann bekannte Verfahrenstechnik.

In der Figur 21A wird der Schritt des Bestrahlens und Aufheizens von Kontaktflächen des Isolierstegs 1350 und des Funktionselements 1352 mittels Infrarotstrahlung gezeigt. Das Funktionselement 1352 als einer der Fügepartner ist hier ein U-förmiges Profil. Auf der nach unten weisenden Bodenfläche 1364 bilden die drei Aufdickungen 1366 eine potentielle Fügezone.

Der Isoliersteg 1350 mit zwei einfachen Einrollvorsprüngen 1356 fungiert als weiterer Fügepartner.

Bei dem Verfahren kommen zwei separate Strahlungsquellen 1370, 1372 zum Einsatz (hier: gerichtete Infrarot-Strahlungsquellen), deren Strahlung 1374, 1376 zur jeweiligen potentiellen Fügezone 1380, 1382 ausgerichtet ist.

In einem folgenden Schritt, dargestellt in der Figur 21B, sind die Strahlungsquellen 1370, 1372 entfernt, und die erhitzten Fügepartner (Isoliersteg 1350 und Funktionselement 1352) sind in der für das Fügen vorgegebenen Relativposition platziert. Diese Relativposition wird geometrisch durch Führungselemente 1386 (hier in Form von Rollen) eingestellt, welche das Funktionselement 1352 seitlich führen.

Die Fügepartner werden durch Anlegen einer Anpresskraft F_{A} in Kontakt gebracht. Die Anpresskraft F_{A} wird über eine in Vorschubrichtung mitlaufende Anpressrolle 1388 dosiert. Dadurch wird das Funktionselement 1352 gegen die Oberseite des Isolierstegs gepresst, wodurch in der erwärmten Fügezone die plastifizierte Schmelze zu fließen beginnt und einen Schmelzebereich 1392 ausbildet. Ein der Anpressrolle 1388 gegenüberliegend angesetztes Anschlagselement 1390 (hier in Form einer Rolle) stützt und hält den Isoliersteg 1350 in Position und verhindert ein Ausweichen in Anpressrichtung (in der Zeichnung nach unten) unter der Anpresskraft. Das Anpressen kann ggf. auch mit mehreren Rollen erfolgen (nicht gezeigt).

Das zwischen den Aufdickungen 1366 vorhandene Volumen kann in der Fügezone (Schmelzebereich 1392) der Aufnahme von plastifiziertem Material oder Schmelzeaustrieb dienen.

Nach vollständiger Ausbildung des Schmelzebereichs 1392 werden die Fügepartner, während weiter eine Haltekraft F_{H} auf die Fügepartner einwirkt, weiter relativ zueinander fixiert bis die Schmelze im Schmelzebereich 1392 erstarrt ist und keine unerwünschte Deformation oder Verschiebung der Fügepartner mehr erfolgen kann (Figur 21C). Während des Haltens erstarrt der zuvor plastifizierte Bereich der Fügezone und ergibt somit eine stoffschlüssige Verbindung in Form einer festen Verschweißung.

Die nötige Haltezeit kann dabei je nach Werkstoffkombination, Prozessparametern und Geometrie der Fügestelle von wenigen ms bis zu mehreren s dauern und lässt sich z.B. über Anzahl und Ausgestaltung von Anpressrollen 1388, 1390 steuern.

Ein durch dieses Verfahren erhaltenes erfindungsgemäßes Isolierprofil wird im Querschnitt in Figur 21D gezeigt.

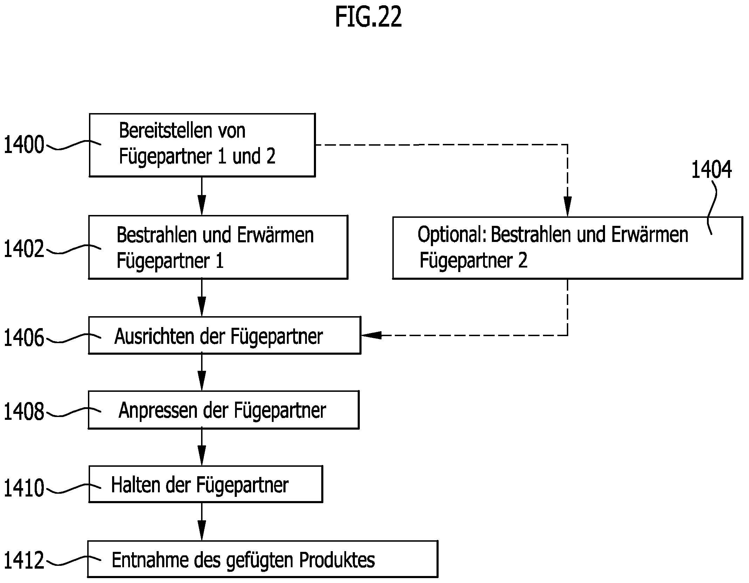

Der im Rahmen der Beschreibung der Figur 21 geschilderte Prozessablauf am Beispiel des Infrarotschweißens ist nochmals in Figur 22 in einem Diagramm dargestellt.

Zuerst werden die Fügepartner in einem Zustand, einer Ausrichtung und Menge bereitgestellt (Schritt 1400), damit das Verfahren durchgeführt werden kann. Anschließend wird in einem folgenden Schritt 1402/1404 ein oder beide Fügepartner durch Bestrahlen mit Infrarotstrahlung erwärmt. Danach werden die Fügepartner in Schritt 1406 passend zueinander ausgerichtet, bevor sie in Schritt 1408 mit ihren Fügezonen aneinander gepresst werden. Nach dem Anpressen werden die Fügepartner in Schritt 1410 in einer vorgegebenen Relativposition gehalten, bis die im Schmelzebereich sich bildende Verbindung ausgehärtet (z.B. durch Abkühlen erstarrt) ist. Nachdem die stoffschlüssige Verbindung erfolgt ist, kann das gefügte Produkt (Isolierprofil) in Schritt 1412 aus der Produktionsanlage entnommen werden.

In all den in den vorstehend beschriebenen Figuren zum Einsatz kommenden, mit Einrollköpfen versehenen Randabschnitten sind bei beiden Randabschnitten gleichartig gestaltet Einrollköpfe gezeigt. Dies entspricht zwar der in der Mehrheit der erfindungsgemäßen Isolierprofile zum Einsatz kommenden Struktur, ist jedoch keinesfalls zwingend. So ist erfindungsgemäß zum Einen auch vorstellbar ein Isolierprofil lediglich mit einem Randabschnitt auszustatten, der dann gegebenenfalls mit einem Einrollkopf ausgerüstet sein kann, oder zum Anderen jeden Randabschnitt mit einer unterschiedliche Geometrie, gegebenenfalls auch mit zwei unterschiedlich ausgestalteten Einrollköpfen auszurüsten.

Das Einrollen ist an sich die gängigste Methode um Kunststoff-Isolierprofile mit Metallprofilen zu verbinden, daneben gibt es aber auch andere Verfahren wie z.B. das Einkleben von Isolierprofilen in Metallprofile. Diese Verbindungsverfahren für Verbundprofile sind mit den beschriebenen erfindungsgemäßen Isolierprofilen ebenfalls realisierbar.

Bei vielen der Ausführungsbeispiele erfindungsgemäßer Isolierprofile sind als erste Funktionselemente streifenförmige, plane sogenannte Fahnen im Einsatz. Während diese Art von ersten Funktionselementen vielfältig zum Einsatz kommt, lassen sich diese jedoch bei Bedarf gegen wesentlich komplexer strukturierte erste Funktionselemente austauschen, die ja auch beispielhaft unter anderem in den Figuren 6-1 und 7 gezeigt sind.

Ebenso kann das Basisprofil selbst bereits beliebig komplex sein. Es können viele bisher bekannte Profilgeometrien aus dem Stand der Technik, insbesondere bereits kommerzialisierte Profile, als Basis dienen um gemäß dem erfindungsgemäßen Verfahren mit weiteren Funktionselementen ausgerüstet zu werden.

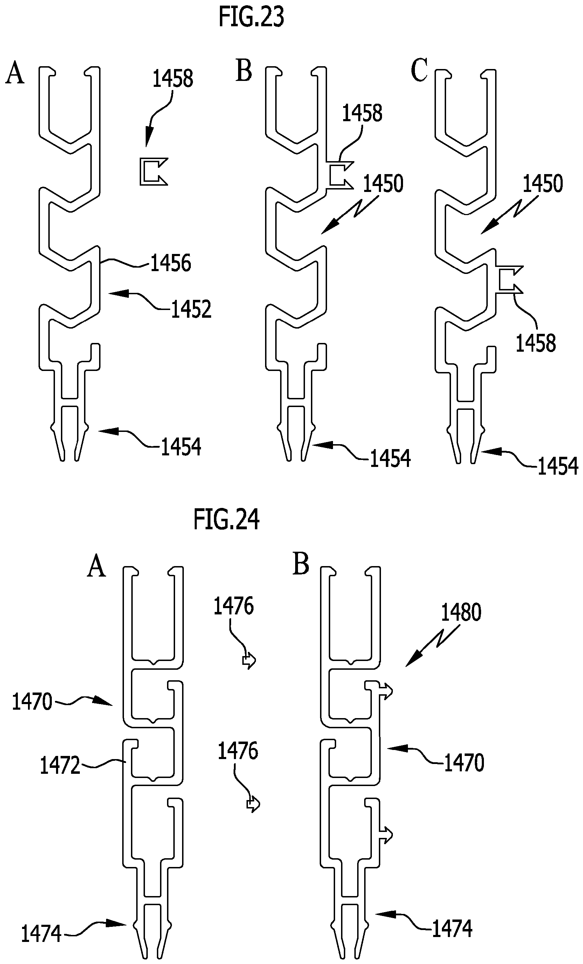

Verschiedene Beispiele für solche weitere Isolierprofile werden im Rahmen der Figuren 23 bis 25 vorgestellt, die erfindungsgemäße Isolierprofile in Form von sogenannten Fassadenabstandhaltern betreffen.

Figur 23 zeigt einen ersten Fassadenabstandhalter 1450 mit einem mäanderförmig ausgebildeten Isoliersteg 1452, der an einem Ende seines Profilkörpers 1456 einen Randabschnitt in Form eines Verankerungsvorsprungs 1454 aufweist. Der Isoliersteg 1452 wird typischerweise in einem Extrusionsschritt einteilig gefertigt und kann im Rahmen der vorliegenden Erfindung mit einem oder mehreren Funktionselementen versehen werden. Im Beispiel der Figur 23 wird ein U-förmiges Halteprofil 1458 als Funktionselement verwendet, welches ähnlich wie das Halteelement 1362 ausgebildet ist, so dass auf dessen nähere Beschreibung Bezug genommen werden kann.

Analog dem im Rahmen der Figuren 21 und 22 beschriebenen Verfahren kann das Haltelement 1458, das beispielsweise Dichtlippen aufnehmen und fixieren kann, an dem Profilkörper 1456 des Isolierstegs stoffschlüssig an einer oder mehreren Positionen befestigt werden, so dass ein Isolierprofil wie in den Figuren 23B und 23C gezeigt resultiert. Selbstverständlich können die Funktionselemente (hier die Halteprofile) nicht nur auf einer Seite des Fassadenabstandhalters, sondern auch auf sich gegenüber liegenden Seiten platziert und stoffschlüssig mit dem Isoliersteg oder Profilkörper verbunden werden.

Ein anderes Beispiel eines Fassadenabstandhalters ist in den Figuren 24A und 24B gezeigt. Hier wird ein Isoliersteg 1470 mit einem Profilkörper 1472 und einem an den Profilkörper 1472 angeformten Randabschnitt 1474, der wiederum als Verankerungsvorsprung ausgebildet ist, mit einem oder mehreren Funktionselementen 1476 ausgerüstet, die im vorliegenden Beispiel als pfeilförmige Verankerungsvorsprünge ausgebildet sind. Auch diese Funktionselemente 1476 können zur Montage von Dichtleisten oder anderen Komponenten zur Modifizierung der Funktionalität des Fassadenabstandhalters 1480 verwendet werden. Auch hier gilt, dass die Funktionselemente an verschiedenen Positionen, auch auf voneinander weg weisenden Seiten des Isolierstegs oder Profilkörpers platziert und befestigt werden können.

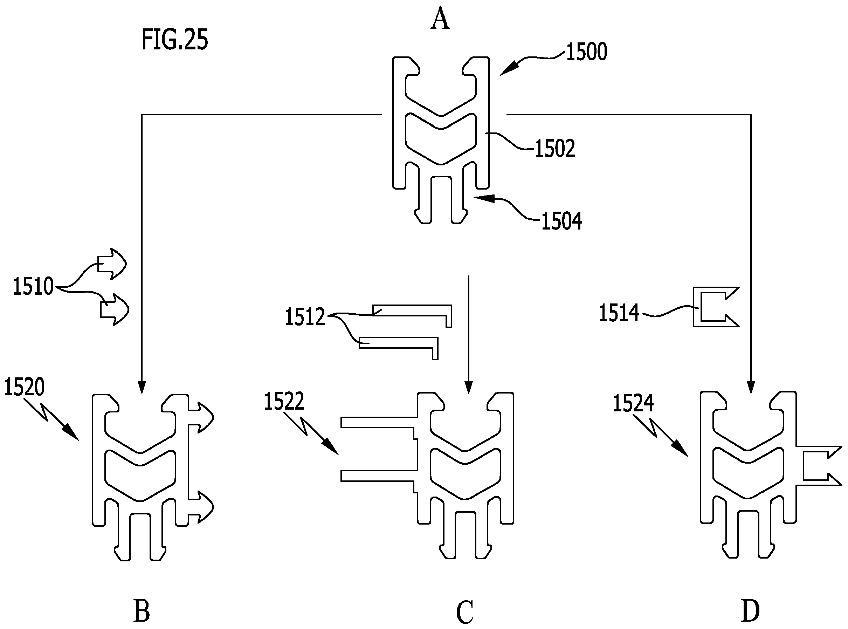

Drei weitere Varianten von Fassadenabstandhaltern sind in der Figur 25 gezeigt, bei der ausgehend von einem in Figur 25A gezeigten Isoliersteg 1500 mit einem Profilkörper 1502 und einem angeformten Randabschnitt 1504, der als Verankerungsvorsprung dient, verschiedene Funktionselemente 1510, 1512, 1514 mit dem Profilkörper verbunden werden, um die gewünschte Funktionalität der Fassadenabstandhalter 1520, 1522, 1524 zu erzielen, die jeweils in den Figuren 25B ist 25D gezeigt sind.

So kann der in Figur 25B gezeigte Fassadenabstandhalter 1520 über die Funktionselemente mit Dichtelementen (nicht gezeigt) bestückt werden. Der in Figur 25C gezeigt Fassadenabstandhalter 1522 weist von dem Profilkörper 1502 abstehende Fahnen auf, die der Verminderung von Konvektion in einem im verbauten Zustand benachbarten Hohlraum dienen und so die Wärmedämmung weiter verbessern. Bei dem schließlich in Figur 25D gezeigten Fassadenabstandhalter 1524 dient das Funktionselement 1514 der Aufnahme einer Dichtleiste (nicht gezeigt), wodurch ebenfalls das Wärmedämmverhalten der Fassadenkonstruktion weiter verbessert werden kann.

Anders als in den Figuren 23 und 24 gezeigt ist der Profilkörper in diesen Ausführungsbeispielen der Figur 25 nicht mäanderförmig, sondern als ein im Querschnitt geschlossenes Hohlprofil ausgebildet.

## Patentansprüche

1. Isolierprofil, insbesondere für die Herstellung von Fenster-, Türen- und Fassadenelementen, wobei das Isolierprofil einen aus einem Polymerwerkstoff gefertigten Isoliersteg sowie ein oder mehrere als separate Bauteile gefertigte erste Funktionselemente umfasst, welche mit dem Isoliersteg stoffschlüssig verbunden sind, wobei der Isoliersteg mindestens einen sich in Längsrichtung des Isolierprofils erstreckenden Profilkörper sowie mindestens einen an den Profilkörper angeformten Randabschnitt aufweist; **dadurch gekennzeichnet, dass** das oder die ersten Funktionselemente eine Wandstärke von ca. 0,6 mm oder mehr aufweist/aufweisen.

2. Isolierprofil nach Anspruch 1, wobei der Profilkörper einen sich in Längsrichtung des Isolierprofils erstreckenden Bereich aufweist, der im Wesentlichen plan ausgebildet ist, oder
wobei der Profilkörper in einem Bereich in Längsrichtung des Isolierprofils in vorgegebenen, insbesondere regelmäßigen Abständen aufeinanderfolgend angeordnete Erhebungen und Vertiefungen aufweist.

3. Isolierprofil nach Anspruch 1 bis 2, **dadurch gekennzeichnet, dass** der Profilkörper in vorgegebenen, insbesondere regelmäßigen Abständen Durchgangsöffnungen aufweist.

4. Isolierprofil nach einem der Ansprüche 1 bis 3, **dadurch gekennzeichnet, dass** der mindestens eine Randabschnitt mit einem Verbindungselement ausgebildet ist, wobei das Verbindungselement insbesondere die Form eines Einrollkopfes aufweist.

5. Isolierprofil nach einem der voranstehenden Ansprüche, wobei das oder die ersten Funktionselemente mit dem Profilkörper und/oder den Randabschnitten des Isolierstegs stoffschlüssig verbunden sind, wobei die stoffschlüssige Verbindung vorzugsweise Hilfsstoff-frei hergestellt ist;
und/oder wobei das oder die ersten Funktionselemente mit dem Profilkörper und/oder dem Randabschnitt des Isolierstegs stoffschlüssig verbunden sind, wobei die stoffschlüssige Verbindung durch Schmelzen oder Anschmelzen des Profilkörpers und/oder der Funktionselemente in einem Kontaktbereich, in dem der Profilkörper und die Funktionselemente in körperlichem Kontakt stehen, hergestellt ist, wobei optional das Schmelzen oder Anschmelzen bei einer Temperatur erfolgt derart, dass eine stoffschlüssige Verbindung resultiert, welche eine Festigkeit von ca. 2 N/mm oder mehr, bevorzugt ca. 5 N/mm oder mehr, besonders bevorzugt ca. 10 N/mm oder mehr aufweist.

6. Isolierprofil nach einem der Ansprüche 1 bis 4, wobei das oder die ersten Funktionselemente mit dem Profilkörper und/oder dem Randabschnitt des Isolierstegs stoffschlüssig verbunden sind, wobei die stoffschlüssige Verbindung unter Verwendung eines Hilfsstoffs, vorzugsweise eines chemisch vernetzenden Hilfsstoffs, hergestellt ist, und wobei die stoffschlüssige Verbindung weiter bevorzugt nicht schmelzbar ist, wobei optional der Hilfsstoff eine Erweichungstemperatur und/oder eine Verarbeitungstemperatur von ca. 95 °C oder mehr, bevorzugt ca. 150 °C oder mehr, weiter bevorzugt von 200 °C oder mehr und am meisten bevorzugt von ca. 220 °C oder mehr aufweist.

7. Isolierprofil nach einem der Ansprüche 1 bis 4, wobei das oder die ersten Funktionselemente mit dem Profilkörper und/oder dem Randabschnitt des Isolierstegs stoffschlüssig verbunden sind, wobei die stoffschlüssige Verbindung durch örtlich beschränktes Lösen oder Anlösen des Profilkörpers und/oder des/der ersten Funktionselemente mit einem Lösemittel erfolgt ist und/oder die Verbindung unter Verwendung eines gelösten Polymers hergestellt ist.

8. Isolierprofil nach einem der voranstehenden Ansprüche, wobei der Isoliersteg integral mit dem Profilkörper ausgebildete zweite und gegebenenfalls weitere Funktionselemente umfasst; und/oder
wobei die ersten Funktionselemente ausgewählt sind aus im Querschnitt planaren, gebogenen, insbesondere teilkreisförmigen, verzweigt oder abgewinkelt ausgebildeten Flächenelementen und/oder einen oder mehrere Hohlräume umschließenden Elementen, und/oder
wobei das oder die ersten Funktionselemente eine Vielzahl an, gegebenenfalls geschlossenen, Hohlräumen in Längsrichtung des Isolierprofils bilden, wobei die Hohlräume insbesondere aneinandergereiht ausgebildet sind; und/oder
wobei das oder die ersten Funktionselemente in Längsrichtung des Isolierprofils gesehen aneinandergrenzende, zueinander abgewinkelte Wandabschnitte aufweisen, welche vorzugsweise im Wesentlichen senkrecht zu dem Profilkörper ausgerichtet sind.

9. Isolierprofil nach einem der voranstehenden Ansprüche, wobei das oder die ersten Funktionselemente aus einem Polymermaterial, bevorzugt auf der Basis eines thermoplastischen Polymers, hergestellt sind.

10. Isolierprofil nach einem der Ansprüche 1 bis 8, wobei das oder die ersten Funktionselemente auf der Basis eines metallischen Materials gefertigt sind, wobei das metallische Material insbesondere in Form von Folien oder Blechen, gegebenenfalls in Kombination mit aus Kunststoff gefertigten Funktionsteilen, zum Einsatz kommt; oder
wobei die Oberfläche und/ oder ein Kern des oder der ersten Funktionselemente ganz oder teilweise Metall-beschichtet oder metallisiert oder metallisch ausgerüstet ist.

11. Verfahren zur Herstellung eines Isolierprofils nach einem der Ansprüche 1 bis 10, wobei zunächst der oder die Profilkörper mit dem mindestens einen Randabschnitt einstückig und hiervon separat das oder die ersten Funktionselemente gefertigt werden,
und wobei in einem nachgelagerten Schritt der oder die Profilkörper mit dem oder den ersten Funktionselementen, gegebenenfalls über den oder die Randabschnitte, stoffschlüssig verbunden werden.

12. Verfahren nach Anspruch 11, wobei die stoffschlüssige Verbindung des oder der ersten Funktionselemente mit dem Profilkörper und/oder dem mindestens einen Randabschnitt mit mittels Schweißen, bevorzugt Ultraschallschweißen, Laserschweißen, Infrarotschweißen, Heizelementschweißen oder Warmgasschweißen, insbesondere Hilfsstoff-frei hergestellt wird; oder
wobei die stoffschlüssige Verbindung des oder der ersten Funktionselemente mit dem Profilkörper und/oder dem mindestens einen Randabschnitt mit mittels Kleben, bevorzugt mit Lösemittelkleben, oder unter der Verwendung von Schmelzklebstoffen, lösemittelbasierten Klebstoffen, Kontaktklebstoffen oder härtenden Klebstoffen, insbesondere Einkomponenten(1K)- oder Zweikomponenten(2K)-Klebstoffsystemen, hergestellt wird; und/oder
wobei die stoffschlüssige Verbindung zwischen dem oder den ersten Funktionselementen und dem Profilkörper und/oder dem mindestens einen Randabschnitt entlang der Längsrichtung des Isolierprofils kontinuierlich, abschnittsweise oder punktuell erfolgt.

13. Verfahren nach einem der Ansprüche 11 oder 12, wobei der Profilkörper bei seiner Fertigung oder in einem nachgelagerten Schritt mit einem Montageelement versehen wird, an den das oder die ersten Funktionselemente angeschlossen werden.

14. Verfahren nach einem der Ansprüche 11 bis 13, wobei der Profilkörper mit dem mindestens einen Randabschnitt und/oder die Funktionselemente als Endlosmaterial bereitgestellt werden und nach der Herstellung der stoffschlüssigen Verbindung derselben das Isolierprofil durch einen Schneide- oder Stanz- oder Fräsprozess auf eine vorgegebene Länge abgelängt wird, wobei optional das Endlosmaterial oder die Endlosmaterialien auf Rollen, Spulen oder Haspeln bereitgestellt werden.

15. Verfahren nach einem der Ansprüche 11 bis 13, wobei der Profilkörper mit dem mindestens einen Randabschnitt und/oder die Funktionselemente vor der Herstellung der stoffschlüssigen Verbindung in Form von Stangenware bereitgestellt wird/werden.

## Claims

1. Insulating profile, in particular for the production of window, door, and facade elements, wherein the insulating profile comprises an insulating bar made of a polymer material and one or more first functional elements made as separate components, which are materially bonded to the insulating bar, wherein the insulating bar has at least one profile body extending in the longitudinal direction of the insulating profile, and at least one rim section formed onto the profile body;
**characterized in that** the first functional element or functional elements has/have a wall thickness of about 0.6 mm or more.

2. Insulating profile in accordance with Claim 1, wherein the profile body has a region which extends in the longitudinal direction of the insulating profile and is of substantially planar configuration, or
wherein the profile body in a region in the longitudinal direction of the insulating profile has raised portions and recessed portions arranged following each other at predetermined, in particular regular distances.

3. Insulating profile in accordance with Claim 1 to 2, **characterized in that** the profile body has through openings at predetermined, in particular regular distances.

4. Insulating profile in accordance with any one of Claims 1 to 3, **characterized in that** the at least one rim section is configured having a connecting element, wherein the connecting element has in particular the form of a roll-in head.

5. Insulating profile in accordance with any one of the preceding Claims, wherein the first functional element or functional elements is/are materially bonded to the profile body and/or the rim sections of the insulating bar, wherein the material bond is preferably produced free of auxiliary material; and/or wherein the first functional element or functional elements is/are materially bonded to the profile body and/or the rim section of the insulating bar, wherein the material bond is produced by melting or superficially melting the profile body and/or the functional elements in a contact region in which the profile body and the functional elements are in physical contact, wherein optionally the melting or superficial melting takes place at a temperature in such a way that it results in a material bond which has a strength of about 2 N/mm or more, preferably about 5 N/mm or more, particularly preferably about 10 N/mm or more.

6. Insulating profile in accordance with any one of Claims 1 to 4, wherein the first functional element or functional elements is/are materially bonded to the profile body and/or the rim section of the insulating bar, wherein the material bond is produced using an auxiliary material, preferably a chemically cross-linking auxiliary material, and wherein the material bond is further preferably not meltable,
wherein optionally the auxiliary material has a softening temperature and/or a processing temperature of about 95 °C or more, preferably about 150 °C or more, further preferably 200 °C or more, and most preferably about 220 °C or more.

7. Insulating profile in accordance with any one of Claims 1 to 4, wherein the first functional element or functional elements is/are materially bonded to the profile body and/or the rim section of the insulating bar, wherein the material bond has been effected by locally dissolving or superficially dissolving the profile body and/or the first functional element or functional elements with a solvent and/or the bond is produced using a dissolved polymer.

8. Insulating profile in accordance with any one of the preceding Claims, wherein the insulating bar comprises second and optionally further functional elements which are integrally formed with the profile body; and/or
wherein the first functional elements are selected from sheet-type elements which are of planar, arcuate, in particular part-circular, branched, or angled configuration in cross section and/or elements enclosing one or a plurality of cavities, and/or
wherein the first functional element or functional elements form a multiplicity of, optionally closed, cavities in the longitudinal direction of the insulating profile, wherein the cavities are configured in particular lined up; and/or
wherein the first functional element or functional elements, seen in the longitudinal direction of the insulating profile, have adjoining wall sections which are angled to each other and are aligned preferably substantially perpendicularly to the profile body.

9. Insulating profile in accordance with any one of the preceding Claims, wherein the first functional element or functional elements are produced of a polymeric material, preferably on the basis of a thermoplastic polymer.

10. Insulating profile in accordance with any one of Claims 1 to 8, wherein the first functional element or functional elements are made on the basis of a metallic material, wherein the metallic material is used in particular in the form of foils or sheets, optionally in combination with functional parts made of plastic; or
wherein the surface and/or a core of the first functional element or functional elements is entirely or partially metal-coated or metalized or metallically treated.

11. Method for producing an insulating profile in accordance with any one of Claims 1 to 10, wherein first the profile body or profile bodies is/are made as one piece with the at least one rim section, and the first functional element or functional elements separately therefrom,
and wherein in a subsequent step the profile body or profile bodies is/are materially bonded to the first functional element or functional elements, optionally by way of the rim section or rim sections.

12. Method in accordance with Claim 11, wherein the material bond of the first functional element or functional elements to the profile body and/or to the at least one rim section is produced by means of welding, preferably ultrasonic welding, laser welding, infrared welding, heat element welding, or hot gas welding, in particular free of auxiliary material; or
wherein the material bond of the first functional element or functional elements to the profile body and/or the at least one rim section is produced by means of adhesion, preferably with solvent adhesion, or using melt adhesives, solvent-based adhesives, contact adhesives, or hardening adhesives, in particular single-component(lK) or two-component(2K) adhesive systems; and/or
wherein the material bond between the first functional element or functional elements and the profile body and/or the at least one rim section takes place continuously, in sections, or at points along the longitudinal direction of the insulating profile.

13. Method in accordance with either of Claims 11 or 12, wherein the profile body in the production thereof or in a subsequent step is provided with an assembly element to which the first functional element or functional elements is/are connected.

14. Method in accordance with any one of Claims 11 to 13, wherein the profile body with the at least one rim section and/or the functional elements are provided as endless material and after producing the material bond of same, the insulating profile is cut to a predetermined length by a cutting or punching or milling process, wherein optionally the endless material or the endless materials are provided on rolls, spools, or reels.

15. Method in accordance with any one of Claims 11 to 13, wherein the profile body with the at least one rim section and/or the functional elements before the production of the material bond are provided in the form of bar-type goods.

## Revendications

1. Profilé isolant, en particulier pour la fabrication d'éléments de fenêtre, de porte et de façade, où le profilé isolant comprend une bande isolante produite à partir d'un matériau polymère et un ou plusieurs premiers éléments fonctionnels réalisés sous forme de composants séparés, qui sont liés de manière cohésive à la bande isolante,
où la bande isolante présente au moins un corps profilé s'étendant dans la direction longitudinale du profilé isolant et au moins une section de bord formée sur le corps profilé; **caractérisé en ce que**
le ou les premiers éléments fonctionnels présente/présentent une épaisseur de paroi d'environ 0,6 mm ou plus.

2. Profilé isolant selon la revendication 1, où le corps profilé présente un domaine s'étendant dans la direction longitudinale du profilé isolant, qui est sensiblement plan, ou
où le corps profilé présente dans un domaine dans la direction longitudinale du profilé isolant des élévations et des dépressions disposées les unes à la suite des autres à intervalles prédéterminés, en particulier réguliers.

3. Profilé isolant selon la revendication 1 à 2, **caractérisé en ce que** le corps profilé présente des ouvertures traversantes à intervalles prédéterminés, en particulier réguliers.

4. Profilé isolant selon l'une des revendications 1 à 3, **caractérisé en ce que** la au moins une section de bord est réalisée avec un élément de liaison, où l'élément de liaison présente en particulier la forme d'une tête d'enroulement.

5. Profilé isolant selon l'une des revendications précédentes, où le ou les premiers éléments fonctionnels sont liés de manière cohésive au corps profilé et/ou aux sections de bord de la bande isolante, où la liaison cohésive est réalisée de préférence sans matériaux auxiliaires;
et/ou où le ou les premiers éléments fonctionnels sont liés de manière cohésive au corps profilé et/ou à la section de bord de la bande isolante, où la liaison cohésive est réalisée par fusion ou fusion superficielle du corps profilé et/ou des éléments fonctionnels dans un domaine de contact où le corps profilé et les éléments fonctionnels sont en contact physique, où éventuellement la fusion ou la fusion superficielle a lieu à une température de telle sorte qu'il en résulte une liaison cohésive qui présente une résistance d'environ 2 N/mm ou plus, de préférence d'environ 5 N/mm ou plus, de manière particulièrement préférée d'environ 10 N/mm ou plus.

6. Profilé isolant selon l'une des revendications 1 à 4, où le ou les premiers éléments fonctionnels sont liés de manière cohésive au corps profilé et/ou à la section de bord de la bande isolante, où la liaison cohésive est réalisée au moyen d'un matériau auxiliaire, de préférence un matériau auxiliaire à réticulation chimique, et où de préférence encore la liaison cohésive est non fusible, où éventuellement le matériau auxiliaire présente une température de ramollissement et/ou une température de mise en oeuvre d'environ 95°C ou plus, de préférence d'environ 150°C ou plus, de préférence encore de 200°C ou plus et de manière particulièrement préférée d'environ 220°C ou plus.

7. Profilé isolant selon l'une des revendications 1 à 4, où le ou les premiers éléments fonctionnels sont liés de manière cohésive au corps profilé et/ou à la section de bord de la bande isolante, où la liaison cohésive a lieu par dissolution ou dissolution superficielle localement limitée du corps profilé et/ou du/des premiers éléments fonctionnels avec un solvant et/ou la liaison est réalisée à l'aide d'un polymère dissous.

8. Profilé isolant selon l'une des revendications précédentes, où la bande isolante comprend des deuxièmes et éventuellement d'autres éléments fonctionnels formés d'un seul tenant avec le corps profilé; et/ou
où les premiers éléments fonctionnels sont choisis parmi des éléments de surface plans, courbés, en particulier partiellement circulaires, ramifiés ou coudés en section transversale et/ou des éléments incluant une ou plusieurs cavités, et/ou
où le ou les premiers éléments fonctionnels forment une pluralité de cavités, éventuellement fermées, dans la direction longitudinale du profilé isolant, où les cavités sont formées en particulier en rangée côte à côte; et/ou
où le ou les premiers éléments fonctionnels, vus dans la direction longitudinale du profilé isolant, présentent des sections de paroi inclinées entre elles, adjacentes les unes aux autres, qui sont de préférence orientées sensiblement perpendiculairement au corps profilé.

9. Profilé isolant selon l'une des revendications précédentes, où le ou les premiers éléments fonctionnels sont fabriqués en un matériau polymère, de préférence à base d'un polymère thermoplastique.

10. Profilé isolant selon l'une des revendications 1 à 8, où le ou les premiers éléments fonctionnels sont réalisés à base d'un matériau métallique, où le matériau métallique est utilisé en particulier sous forme de feuilles ou de tôles, éventuellement en combinaison avec des pièces fonctionnelles produites en matériau synthétique; ou
où la surface et/ou un noyau du ou des premiers éléments fonctionnels est totalement ou partiellement revêtue de métal ou métallisée ou munie d'une finition métallique.

11. Procédé de fabrication d'un profilé isolant selon l'une des revendications 1 à 10, où tout d'abord le ou les corps profilés sont produits d'une seule pièce avec la au moins une section de bord et le ou les premiers éléments fonctionnels sont produits séparément,
et où dans une étape ultérieure le ou les corps profilés sont liés de manière cohésive avec le ou les premiers éléments fonctionnels, éventuellement par l'intermédiaire de la ou les sections de bord.

12. Procédé selon la revendication 11, où la liaison cohésive du ou des premiers éléments fonctionnels avec le corps profilé et/ou la au moins une section de bord est réalisée par soudage, de préférence soudage par ultrasons, soudage laser, soudage infrarouge, soudage à élément chauffant ou soudage à gaz chaud, en particulier sans matériaux auxiliaires; ou
où la liaison cohésive du ou des premiers éléments fonctionnels avec le corps profilé et/ou la au moins une section de bord est réalisée au moyen d'un collage, de préférence un collage au solvant, ou à l'aide d'adhésifs fusibles, d'adhésifs à base de solvants, d'adhésifs par contact ou d'adhésifs durcissants, en particulier de systèmes adhésifs monocomposants (1K) ou bicomposants (2K); et/ou
où la liaison cohésive entre le ou les premiers éléments fonctionnels et le corps profilé et/ou la au moins une section de bord a lieu de manière continue, par sections ou de manière ponctuelle le long de la direction longitudinale du profilé isolant.

13. Procédé selon l'une des revendications 11 ou 12, où le corps profilé est muni lors de sa production ou dans une étape ultérieure d'un élément de montage auquel le ou les premiers éléments fonctionnels sont raccordés.

14. Procédé selon l'une des revendications 11 à 13, où le corps profilé avec la au moins une section de bord et/ou les éléments fonctionnels sont mis à disposition sous forme d'un matériau continu et après l'établissement de la liaison cohésive de ceux-ci, le profilé isolant est coupé à une longueur prédéterminée par un processus de découpe, de poinçonnage ou de fraisage, où éventuellement le matériau continu ou les matériaux continus sont mis à disposition sur des rouleaux, des bobines ou des tourniquets.

15. Procédé selon l'une des revendications 11 à 13, où le corps profilé avec la au moins une section de bord et/ou les éléments fonctionnels est/sont mis à disposition sous forme de produits en barres avant la formation de la liaison cohésive.
